(19) Europäisches Patentamt
European Patent Office
Office européen des brevets

(11) EP 4 776 189 A1

(12) EUROPEAN PATENT APPLICATION

(43) Date of publication:
15.07.2026 Bulletin 2026/29

(21) Application number: 25226242.3

(22) Date of filing: 22.12.2025

(51) International Patent Classification (IPC):
G06N 10/20 (2022.01)      G06N 10/60 (2022.01)
G06N 10/70 (2022.01)

(52) Cooperative Patent Classification (CPC):
G06N 10/20; G06N 10/60; G06N 10/70

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 08.01.2025 JP 2025003081

(71) Applicant: FUJITSU LIMITED
Kawasaki-shi, Kanagawa 211-8588 (JP)

(72) Inventor: SUGIYAMA, Takanori
Kawasaki-shi, 211-8588 (JP)

(74) Representative: Haseltine Lake Kempner LLP
Cheapside House
138 Cheapside
London EC2V 6BJ (GB)

(54) **COMPUTER PROGRAM, QUANTUM OPERATION EVALUATION METHOD, AND INFORMATION PROCESSING APPARATUS**

(57)    An information processing apparatus acquires measurement data indicating measurement values of quantum states of qubits measured after a quantum computer has repeatedly executed, a plurality of times, a quantum gate sequence including a plurality of quantum gates for the qubits. The information processing apparatus divides a space to which a matrix indicating a quantum operation by the quantum gate sequence belongs into a first subspace including a singular point at which eigenvalues satisfying predetermined conditions are calculated, and a second subspace that does not include the singular point, and generates, within a range of the second subspace, a function that linearly approximates an influence of an error of a quantum gate included in the plurality of quantum gates on the mea- surement value. The information processing apparatus estimates, by using the function and the measurement data, the error of the quantum gate when the quantum computer executes the quantum gate.

INFORMATION PROCESSING APPARATUS — 10

STORING UNIT — 11

QUANTUM GATE SEQUENCE — 13  ×N

G$_1$  G$_2$  G$_3$

13a

MEASUREMENT DATA — 14
{ x$_1$: 0.7, x$_2$: 0.2, ··· }

SPACE — 15

15c

SINGULAR POINT

15a  SUBSPACE  15b

FUNCTION f ( δ G$_2$ ) — 16

PROCESSING UNIT — 12

FIG. 1

EP 4 776 189 A1

**Description**

FIELD

The embodiments discussed herein relate to a computer program, a quantum operation evaluation method, and an information processing apparatus.

BACKGROUND

A gate-based quantum computer performs various quantum operations on qubits. A quantum computer initializes qubits, applies quantum gates to the qubits, and measures values of the qubits. A quantum computer is implemented using physical platforms such as superconducting quantum circuits, semiconductor quantum dots, diamond nitrogen-vacancy (NV) centers, and nuclear magnetic resonance (NMR) molecules.

The implemented quantum computer typically has errors in which the action of a quantum operation deviates from an ideal action. A user sometimes evaluates errors of quantum operations and, based on evaluation results, performs calibration in which values of control parameters held by the quantum computer are adjusted. For example, a quantum computer may have control parameters for adjusting, for a microwave pulse emitted to qubits, a duration, an amplitude, and a waveform. By adjusting values of the control parameters, accuracy of quantum operations may be improved.

Here, since a measurement value of a qubit is generated through a plurality of types of quantum operations, it is not easy to directly evaluate an error of an individual quantum operation. Accordingly, as one technique for estimating errors of quantum operations, quantum tomography is available. Quantum tomography performs experiments in which measurement values are repeatedly acquired from the quantum computer while combinations of quantum operations are changed. Quantum tomography analyzes experimental data to estimate errors of individual quantum operations.

There are techniques that execute a tomography experiment using a quantum processor in accordance with a quantum circuit, analyze experimental results to generate tomographic data, and visualize the tomographic data. In addition, there are techniques that perform quantum tomography for a target quantum system and analyze a quantum noise process based on transfer tensor mapping that indicates the dynamical evolution of the quantum noise process. See, for example, the following literature references.

U.S. Patent Application Publication No. 2019/0102917
International Publication Pamphlet No. WO 2020/228470

When evaluating errors of quantum gates, quantum tomography may use a quantum circuit including an error-amplification circuit that repeats the same sequence of quantum gates. Because the error-amplification circuit amplifies a minute error in a quantum gate, an error component included in a measurement value becomes easier to observe, thereby improving reliability of evaluation results. On the other hand, since the error-amplification circuit has a nonlinear amplifying effect with respect to errors, data analysis may become complicated. As a result, a load of data analysis may increase, and numerical stability of the evaluation results may decrease.

For example, when the amplifying effect of an error-amplification circuit is approximated by a linear function, depending on the quantum gate, singular points at which an abnormal value such as infinity is calculated may appear in the calculation of the linear function. In such a case, with a simple approximation method, it is difficult to evaluate an error of a quantum gate.

SUMMARY

One aspect is to improve the efficiency of evaluating errors of quantum gates.

In one aspect, there is provided a computer program that causes a computer to execute a process including: acquiring measurement data indicating measurement values of quantum states of qubits measured after a quantum computer has repeatedly executed, a plurality of times, a quantum gate sequence including a plurality of quantum gates for the qubits; dividing a space to which a matrix indicating a quantum operation by the quantum gate sequence belongs into a first subspace including a singular point at which eigenvalues satisfying predetermined conditions are calculated, and a second subspace that does not include the singular point, and generating, within a range of the second subspace, a function that linearly approximates an influence of an error of a first quantum gate included in the plurality of quantum gates on the measurement values; and estimating, by using the function and the measurement data, the error of the first quantum gate when the quantum computer executes the first quantum gate.

BRIEF DESCRIPTION OF DRAWINGS

Reference is made to the following drawings, by way of example only, in which:

FIG. 1 illustrates an information processing apparatus according to a first embodiment;
FIG. 2 illustrates a hardware example of an information processing system of a second embodiment;
FIG. 3 illustrates an example of an evaluation quantum circuit including an error-amplification circuit;
FIG. 4 illustrates an example of pseudocode for identifying a subspace affected by singular points;
FIG. 5 illustrates an example of a matrix representing projection onto a subspace unaffected by singular points;
FIG. 6 is a block diagram illustrating functional examples of an information processing apparatus;
FIG. 7 illustrates an example of setting data;
FIG. 8 illustrates examples of experimental data and evaluation data;
FIG. 9 is a flowchart illustrating an example procedure for quantum operation evaluation; and
FIG. 10 is a flowchart (continued) illustrating the example procedure for quantum operation evaluation.

DESCRIPTION OF EMBODIMENTS

Hereinafter, embodiments will be described with reference to the drawings.

(a) First Embodiment

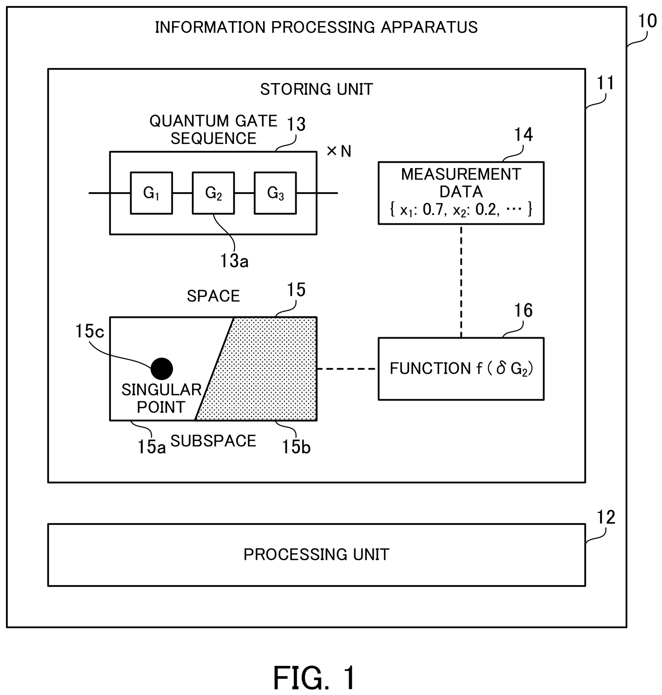

FIG. 1 illustrates an information processing apparatus according to a first embodiment. An information processing apparatus 10 of the first embodiment evaluates, by quantum tomography, accuracy of quantum operations performed by a quantum computer. The information processing apparatus 10 may be a so-called classical computer. The information processing apparatus 10 may be a client apparatus or may be a server apparatus. The information processing apparatus 10 may also be referred to as a computer or a quantum operation evaluation apparatus.

The information processing apparatus 10 includes a storing unit 11 and a processing unit 12. The storing unit 11 may be volatile semiconductor memory such as random access memory (RAM). The storing unit 11 may also be nonvolatile storage such as a hard disk drive (HDD) or flash memory.

The processing unit 12 is, for example, a processor such as a central processing unit (CPU), a graphics processing unit (GPU), or a digital signal processor (DSP). However, the processing unit 12 may include electronic circuitry such as an application-specific integrated circuit (ASIC) or a field programmable gate array (FPGA). A processor executes a program stored in memory such as RAM. A processor is sometimes referred to as processor circuitry. A collection of processors is sometimes referred to as a multiprocessor or simply as "a processor". Different ones of a plurality of processes described later may be executed by different processors.

The storing unit 11 stores measurement data 14. The measurement data 14 indicates measurement values of quantum states of qubits that are measured after a quantum computer repeatedly (for the number of repetitions N) executes a quantum gate sequence 13 on the qubits. The quantum computer that executes the quantum gate sequence 13 is a quantum computer whose implementation accuracy is to be evaluated. The information processing apparatus 10 may be connected to the quantum computer and may read out measurement values from the quantum computer. The information processing apparatus 10 may also receive the measurement data 14 from another information processing apparatus connected to the quantum computer. The information processing apparatus 10 may sequentially acquire measurement values from the quantum computer while advancing data analysis described below.

The quantum gate sequence 13 includes one or more quantum gates (typically, a plurality of quantum gates). As an example of a quantum gate, a 180-degree rotation gate is included. The quantum gate sequence 13 includes a quantum gate 13a that is a target whose accuracy is to be evaluated. An implementation of the quantum gate 13a on the quantum computer has an error that indicates a deviation from an ideal action. The quantum gate sequence 13 may include two or more quantum gates that are targets of evaluation, and may include one or more quantum gates that are not targets of evaluation. In the data analysis described below, actual errors of quantum gates that are not targets of evaluation may be known, may be assumed to have no error, or may be assumed to be constant.

The quantum gate sequence 13 is, for example, described by a quantum circuit. A quantum circuit that repeats the same quantum gate sequence a plurality of times is sometimes referred to as an error-amplification circuit. A quantum computer sequentially executes, on qubits, quantum gates from a first quantum gate to a last quantum gate of the quantum gate sequence 13. The quantum computer, with a quantum state indicated by the qubits being carried over, again sequentially executes, on the qubits, quantum gates from the first quantum gate to the last quantum gate of the quantum gate sequence 13. An error in the quantum gate 13a is amplified through the error-amplification circuit. A measurement value of a qubit that is finally measured by the quantum computer includes an amplified error component.

In a quantum computer, even when an initialization method for qubits, kinds of quantum gates, and a measurement method are the same, a measurement value is obtained probabilistically. Therefore, the measurement data 14 indicates, for example, a probability distribution that enumerates an occurrence probability of each of a plurality of values that a qubit may take. The information processing apparatus 10 may cause the quantum computer to perform a plurality of trials in which qubits are initialized, the quantum gate sequence 13 is executed a fixed number of times, and values of the qubits are measured. The information processing apparatus 10 may calculate the occurrence probability for each value by dividing the number of occurrences of each value by the number of trials.

The measurement data 14 may include a plurality of measurement results corresponding to different initialization methods and different measurement methods. The measurement data 14 may also include a plurality of measurement results corresponding to different quantum gate sequences, and may include a plurality of measurement results corresponding to different values of the number of repetitions N.

The processing unit 12 analyzes the measurement data 14 to estimate an error when the quantum computer executes the quantum gate 13a. Here, an influence of an error of the quantum gate 13a on a measurement value is, strictly speaking, nonlinear. In contrast, in order to facilitate data analysis, the processing unit 12 generates a function 16 that linearly approximates the influence of the error of the quantum gate 13a on the measurement value. The function 16 is a linear approximation function and is represented, for example, by using a matrix.

The processing unit 12 estimates the error of the quantum gate 13a by using the measurement data 14 and the function 16. For example, the processing unit 12 extracts, from the measurement data 14, an amplified component proportional to the number of repetitions N. The processing unit 12 optimizes the error of the quantum gate 13a that is input to the function 16 so that a difference between the extracted amplified component and an output of the function 16 becomes minimum. The processing unit 12, for example, formulates this optimization problem as a quadratic programming problem with a semidefinite constraint and calculates the error of the quantum gate 13a by using a numerical computation solver.

In generating the function 16, the processing unit 12 represents, by a matrix, an ideal quantum operation without an error for a quantum gate included in the quantum gate sequence 13. This matrix may be referred to as a generator (Lindbladian). The generator corresponds to a matrix logarithm of a quantum gate matrix that indicates a transformation of a quantum state. From matrices indicating quantum gates included in the quantum gate sequence 13, a matrix indicating an overall quantum operation of the quantum gate sequence 13 is generated. For example, the processing unit 12 composes, in order from the first, the quantum gates included in the quantum gate sequence 13.

Further, from the matrix indicating the overall quantum operation of the quantum gate sequence 13, a matrix indicating an overall quantum operation that repeats the quantum gate sequence 13 a plurality of times is generated. The processing unit 12 generates the function 16, which is the linear approximation function, by extracting a first-order component of the action by which the error of the quantum gate 13a changes through composition and amplification, for example. In extracting the first-order component, the processing unit 12 may perform spectral decomposition that decomposes each matrix of the quantum gates into a sum of products of eigenvalues and projection matrices. This spectral decomposition may also be referred to as eigendecomposition.

A space 15 to which a matrix indicating an overall quantum operation by the quantum gate sequence 13 belongs may include a singular point 15c. The singular point 15c is a point that indicates a matrix whose eigenvalue satisfies a certain condition. The singular point 15c may also be referred to as a critical point. For example, the singular point 15c corresponds to a generator that has different eigenvalues such that values of exponential functions with Napier's constant e as the base become identical. When eigenvalues are complex numbers, values of exponential functions calculated from different eigenvalues may become identical. The processing unit 12 may determine that two eigenvalues satisfy the above certain condition when a difference between the values of the exponential functions becomes smaller than a threshold.

Depending on the kinds of quantum gates included in the quantum gate sequence 13, in the above linear approximation process, a matrix corresponding to the singular point 15c may be obtained. As an example of a quantum gate for which a matrix corresponding to the singular point 15c may be obtained, a 180-degree rotation gate is included. At the singular point 15c, an abnormal value, such as a value analogous to division by zero, may be obtained. This means that, at the singular point 15c, a linear approximation of the action of the quantum gate sequence 13 does not hold.

Accordingly, the processing unit 12 divides the space 15 into subspaces 15a and 15b. The subspace 15a is a subspace that includes the singular point 15c. The subspace 15b is a subspace that does not include the singular point 15c. The subspace 15b is, for example, an orthogonal complement subspace of the subspace 15a, and has no intersection with the subspace 15a.

For example, the processing unit 12 composes, in order from the first, generators of the quantum gates included in the quantum gate sequence 13, and decomposes, at each stage, each composite generator into a sum of products of eigenvalues and projection matrices. The processing unit 12 specifies the subspace 15a by using a projection matrix corresponding to an eigenvalue that satisfies the above-described condition. For example, the processing unit 12 calculates a projection matrix that projects a point of the space 15 onto the subspace 15a. The processing unit 12 calculates, as a projection matrix that projects a point of the space 15 onto the subspace 15b, a matrix that is orthogonal to the projection matrix onto the subspace 15a.

The processing unit 12 generates the function 16, which linearly approximates the influence of an error of the quantum gate 13a on a measurement value, within the subspace 15b. The function 16 suppresses the calculation of matrices that belong to the subspace 15a. For example, the function 16 includes a projection matrix onto the subspace 15b and performs matrix computation limited to matrices that belong to the subspace 15b by using the projection matrix. In addition, the processing unit 12 extracts, from the measurement data 14, a component corresponding to the subspace 15b by using the projection matrix onto the subspace 15b. The processing unit 12 estimates the error of the quantum gate 13a by comparing an output of the function 16 with the component extracted from the measurement data 14.

As described above, in the first embodiment, the information processing apparatus 10 acquires the measurement data 14 that indicates measurement values of quantum states of qubits, which are measured after the quantum computer repeatedly executes, a plurality of times, the quantum gate sequence 13 including a plurality of quantum gates on the qubits. The information processing apparatus 10 divides the space 15 to which a matrix indicating an overall quantum operation by the quantum gate sequence 13 belongs into the subspace 15a that includes the singular point 15c at which an eigenvalue satisfying a certain condition is obtained, and the subspace 15b that does not include the singular point 15c.

The information processing apparatus 10 generates, within the subspace 15b, the function 16 that linearly approximates the influence of an error of the quantum gate 13a included in the plurality of quantum gates on a measurement value. The information processing apparatus 10 estimates the error when the quantum computer executes the quantum gate 13a by using the function 16 and the measurement data 14.

**In** this manner, the error of the quantum gate 13a implemented in the quantum computer is estimated. Therefore, a user is enabled to perform calibration in which values of control parameters held by the quantum computer are adjusted based on the estimated error. **In** addition, since an error-amplification circuit that repeats the quantum gate sequence 13 a plurality of times is used, the error is amplified and the accuracy of error estimation is improved.

Moreover, the function 16 linearly approximates the action of the quantum gate sequence 13. Therefore, a load of quantum tomography is reduced and the numerical stability of the estimated error is improved. Further, the function 16 performs a linear approximation within the subspace 15b that does not include the singular point 15c associated with the quantum gate sequence 13. Therefore, even when the quantum gate sequence 13 includes a quantum gate for which a matrix corresponding to the singular point 15c is obtained in the course of the linear approximation, approximate computation becomes feasible. Accordingly, evaluation of the error of the quantum gate 13a is made efficient.

**In** the error of the quantum gate 13a, a component affected by the singular point 15c is mainly a portion that describes dissipation of information of qubits. A component that describes noise at a time of control of qubits has a small influence from the singular point 15c. Therefore, even when the information processing apparatus 10 estimates the error within the range of the subspace 15b, useful estimation results are generated. For example, the information processing apparatus 10 generates estimation results that are useful for calibration of the quantum computer.

(b) Second Embodiment

An information processing system of a second embodiment includes an information processing apparatus 100 and a quantum computer 115. The information processing apparatus 100 evaluates, by performing quantum tomography, the accuracy of quantum operations performed by the quantum computer 115. The information processing apparatus 100 performs calibration in which values of control parameters held by the quantum computer 115 are adjusted so that accuracy is improved. The information processing apparatus 100 corresponds to the information processing apparatus 10 of the first embodiment.

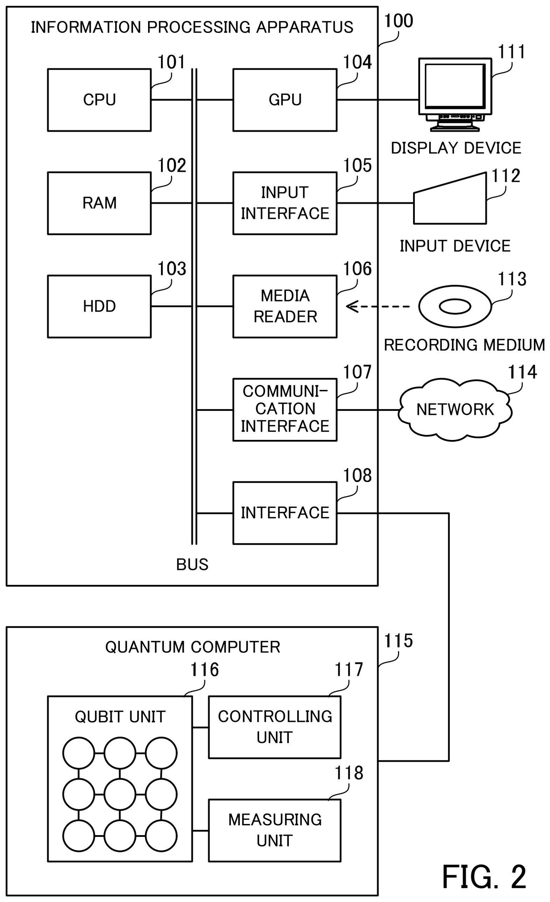

FIG. 2 illustrates a hardware example of the information processing system of the second embodiment. The information processing apparatus 100 includes a CPU 101, a RAM 102, an HDD 103, a GPU 104, an input interface 105, a media reader 106, a communication interface 107, and an interface 108. These units are connected to a bus. The CPU 101 corresponds to the processing unit 12 of the first embodiment. The RAM 102 or the HDD 103 corresponds to the storing unit 11 of the first embodiment.

The CPU 101 is a processor that executes instructions of a program. The CPU 101 loads, into the RAM 102, a program and data stored in the HDD 103 and executes the program. The information processing apparatus 100 may include a plurality of processors.

The RAM 102 is a volatile semiconductor memory that temporarily stores a program executed by the CPU 101 and data used for computation by the CPU 101. The information processing apparatus 100 may include a type of volatile memory other than RAM.

The HDD 103 is a nonvolatile storage that stores software programs such as an operating system (OS), middleware, and application software, and that also stores data. The information processing apparatus 100 may include another type of nonvolatile storage such as flash memory or a solid-state drive (SSD).

The GPU 104 performs image processing in cooperation with the CPU 101 and outputs an image to a display device 111 connected to the information processing apparatus 100. The display device 111 is, for example, a cathode ray tube (CRT) display, a liquid crystal display, an organic electroluminescence (EL) display, or a projector. Another type of output device such as a printer may be connected to the information processing apparatus 100.

Further, the GPU 104 may be used for general purpose computing on a graphics processing unit (GPGPU). The GPU 104 may execute a program in response to an instruction from the CPU 101. The information processing apparatus 100 may include, as GPU memory, volatile semiconductor memory other than the RAM 102.

The input interface 105 receives input signals from an input device 112 connected to the information processing apparatus 100. The input device 112 is, for example, a mouse, a touch panel, or a keyboard. A plurality of input devices may be connected to the information processing apparatus 100.

The media reader 106 is a reading device that reads a program and data recorded on a recording medium 113. The recording medium 113 is, for example, a magnetic disk, an optical disk, or semiconductor memory. The magnetic disk includes a flexible disk (FD) and an HDD. The optical disk includes a compact disc (CD) and a digital versatile disc (DVD). The media reader 106 copies a program and data read from the recording medium 113 to another recording medium such as the RAM 102 or the HDD 103. The read program may be executed by the CPU 101.

The recording medium 113 may be a portable recording medium. The recording medium 113 may be used to distribute programs and data. The recording medium 113 and the HDD 103 may also be referred to as computer-readable recording media.

The communication interface 107 communicates with another information processing apparatus via a network 114. The communication interface 107 may be a wired communication interface that is connected to a wired communication device such as a switch or a router, or may be a wireless communication interface that is connected to a wireless communication device such as a base station or an access point.

The interface 108 is connected to the quantum computer 115. The interface 108 transmits commands to the quantum computer 115 in response to an instruction from the CPU 101. The interface 108 also receives data from the quantum computer 115 and writes the received data to the RAM 102 or the HDD 103.

The quantum computer 115 includes a qubit unit 116, a controlling unit 117, and a measuring unit 118. The qubit unit 116 includes a plurality of qubits that represents a quantum state. The plurality of qubits is, for example, arranged in a lattice. Quantum operations on qubits are implemented, for example, as irradiation of microwave pulses to the qubits.

The controlling unit 117 receives, from the information processing apparatus 100, commands for calibration of quantum operations. A command includes, for example, a name of a control parameter and a value of the control parameter. Examples of control parameters include a duration, an amplitude, and a waveform of a microwave pulse. By changing values of the control parameters, the accuracy of quantum operations changes. The controlling unit 117, in response to an instruction from the information processing apparatus 100, executes, on the qubit unit 116, a quantum operation corresponding to a quantum gate. For example, the controlling unit 117 transmits, to the qubit unit 116, a microwave pulse having a waveform according to values of the control parameters.

The measuring unit 118 measures values of qubits in response to an instruction from the information processing apparatus 100 and stores the measurement values in memory of the quantum computer 115. The measuring unit 118 transmits the measurement values to the information processing apparatus 100 in response to a request from the information processing apparatus 100.

In general, quantum information processing includes quantum computation, quantum simulation, quantum communication, quantum cryptography, and quantum sensing. Examples of physical platforms for quantum information processing include superconducting quantum circuits, semiconductor quantum dots, diamond NV centers, NMR molecules, neutral atoms, trapped ions, and light. A typical quantum information processing protocol based on quantum circuits uses three kinds of quantum operations: initialization, quantum gates, and measurement.

Quantum operations executed by the quantum computer 115 have errors that indicate deviations from ideal quantum operations. The information processing apparatus 100 performs evaluation and calibration for the quantum computer 115 in order to improve the accuracy of quantum operations. Evaluation estimates the errors of quantum operations. Calibration changes values of control parameters so that the errors become small, based on the error information. The information processing apparatus 100 may repeat evaluation and calibration.

The information processing apparatus 100 evaluates quantum operations by quantum tomography. The information processing apparatus 100 collects measurement values of qubits from the quantum computer 115 while combinations of initialization, quantum gates, and measurement are changed. The information processing apparatus 100 analyzes experimental data that associates tried combinations with measurement values, and estimates the errors of quantum operations. Quantum tomography is capable of estimating errors of a plurality of quantum gates at once.

The information processing apparatus 100 generates a quantum circuit that includes an error-amplification circuit that repeats the same quantum gate sequence a plurality of times and causes the quantum computer 115 to execute the quantum circuit. The number of repetitions is, for example, 10, 100, or 1000. Errors of quantum gates included in the quantum gate sequence are amplified through the error-amplification circuit. As a result, an error component included in measurement values becomes large and the evaluation accuracy is improved. Examples of quantum tomography techniques that use an error-amplification circuit include gate-set tomography (GST), idle tomography (IT), and Hamiltonian error amplifying tomography (HEAT).

As for GST, see, for example, the following non-patent literature: Erik Nielsen, John King Gamble, Kenneth Rudinger, Travis Scholten, Kevin Young, and Robin Blume-Kohout, "Gate Set Tomography", the open journal for quantum science, Volume 5, page 557, October 2021.

As for HEAT, see, for example, the following non-patent literature: Neereja Sundaresan, Isaac Lauer, Emily Pritchett, Easwar Magesan, Petar Jurcevic, and Jay M. Gambetta, "Reducing Unitary and Spectator Errors in Cross Resonance with Optimized Rotary Echoes", PRX Quantum of the American Physical Society, Volume 1, page 020318, December 2020.

As for the error-amplification circuit, the following two non-patent literature references also describe the error-amplification circuit: Gabriel O. Samach, Ami Greene, Johannes Borregaard, Matthias Christandl, Joseph Barreto, David K. Kim, Christopher M. McNally, Alexander Melville, Bethany M. Niedzielski, Youngkyu Sung, Danna Rosenberg, Mollie E. Schwartz, Jonilyn L. Yoder, Terry P. Orlando, Joel I-Jan Wang, Simon Gustavsson, Morten Kjaergaard, and William D. Oliver, "Lindblad Tomography of a Superconducting Quantum Processor", Physical Review Applied of the American Physical Society, Volume 18, page 064056, December 2022.

Yanwu Gu, Rajesh Mishra, Berthold-Georg Englert, and Hui Khoon Ng, "Randomized Linear Gate-Set Tomography", PRX Quantum of the American Physical Society, Volume 2, page 030328, August 2021.

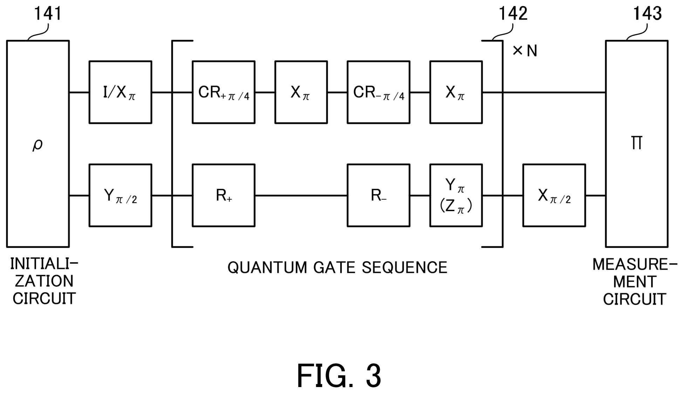

FIG. 3 illustrates an example of an evaluation quantum circuit including an error-amplification circuit. This quantum circuit includes an initialization circuit 141, a quantum gate sequence 142, and a measurement circuit 143. The initialization circuit 141 initializes one or more qubits to generate a desired quantum state. The quantum gate sequence 142 includes one or more quantum gates. The error-amplification circuit repeats the quantum gate sequence 142 the number of repetitions N times in series. The measurement circuit 143 measures the values of qubits.

A quantum gate that is not repeated may be included between the initialization circuit 141 and the quantum gate sequence 142. A quantum gate that is not repeated may also be included between the quantum gate sequence 142 and the measurement circuit 143. In FIG. 3, an X gate is a rotation gate about an x axis, a Y gate is a rotation gate about a y axis, and a Z gate is a rotation gate about a z axis. A CR gate is a cross-resonance gate. An R gate is a rotation gate that rotates by a fixed amount.

Quantum tomography collects experimental data while varying combinations of the quantum gate sequence 142, the number of repetitions N, the initialization circuit 141, and the measurement circuit 143. The quantum gate sequence 142 includes one or more quantum gates whose errors are to be evaluated, and may also include one or more quantum gates whose errors are not evaluated.

Ideal actions of quantum gates to be evaluated and quantum gates other than those to be evaluated are known. Errors of quantum gates to be evaluated in the quantum computer 115 are unknown. Errors of quantum gates other than those to be evaluated in the quantum computer 115 may be known or may be unknown. **In** the latter case, quantum tomography may regard errors of quantum gates other than those to be evaluated as zero, or may assume the errors to be constant.

Here, attempting to strictly define an action of an error-amplification circuit with respect to errors of quantum gates leads to a highly nonlinear numerical optimization problem. As a result, a load of experimental data analysis may increase and the stability of the solution search may decrease. Accordingly, the information processing apparatus 100 linearly approximates the action of the error-amplification circuit and formulates exploration of error parameters of quantum gates as a semidefinite-constrained quadratic programming problem. The semidefinite-constrained quadratic programming problem is a numerical optimization problem that optimizes a quadratic function under linear constraints, and eigenvalues of a matrix are nonnegative. A method of the second embodiment may be referred to as robust Lindbladian tomography (RLT).

Hereinafter, computation of quantum tomography in the second embodiment will be described with reference to expressions. An action of a quantum gate acting on a d-dimensional quantum system is described by a linear map as indicated in Expression (1). This linear map is defined from a $d \times d$-dimensional complex space to a dxd-dimensional complex space and is trace-preserving and completely positive. Here, under an orthonormal basis indicated in Expression (2), a representation matrix of the linear map of Expression (1) is denoted by G. The orthonormal basis is a set of $d^2$ elements $B_\alpha$ whose norms are 1 and which are mutually orthogonal. A component $G_{\alpha\beta}$ in an $\alpha$-th row and a $\beta$-th column of the matrix G is calculated by using a trace with an element $B_\alpha$ of the orthonormal basis corresponding to the $\alpha$-th row and an element $B_\beta$ of the orthonormal basis corresponding to the $\beta$-th column, as in Expression (3).

$$\mathcal{G} : \mathbf{C}^{d \times d} \to \mathbf{C}^{d \times d} \qquad (1)$$

$$\mathbf{B} = \{B_\alpha\}_{\alpha=0}^{d^2-1} \qquad (2)$$

$$G_{\alpha\beta} = \mathrm{Tr}[B_\alpha^\dagger \mathcal{G}(B_\beta)] \qquad (3)$$

Through the exponential map exp, there exists the linear map that satisfies the relationship of Expression (4) with the quantum gate defined in Expression (1). The linear map is sometimes referred to as the generator (Lindbladian). When the representation matrix of the linear map of Expression (4) is denoted by L, the relationship of Expression (5) holds between the representation matrix G of the quantum gate and the representation matrix L of the generator by using the matrix exponential e. When the representation matrix of an ideal value of the generator is denoted by $L^{\mathrm{ideal}}$, and the representation matrix of an error of the generator is denoted by $\delta L$, $G = e^L$ is expanded as indicated in Expression (5).

$$\mathcal{G} = \exp(\mathcal{L}) \qquad (4)$$

$$G = e^L = e^{L^{\mathrm{ideal}} + \delta L} \qquad (5)$$

When the error is amplified through the error-amplification circuit, the error of the generator, which corresponds to the matrix logarithm of the quantum gate, is easier to analyze than the error of the quantum gate itself. This is because, when the error accumulates, a rotation occurs in qubits, and there may be a case where a deviation of an angle is not strictly proportional to the number of repetitions N. Accordingly, in the second embodiment, the information processing apparatus 100 estimates the generator error from the experimental data. Since the ideal value of the generator is known, if the generator error is obtained, the actual G in the quantum computer 115 becomes known. In the following, for simplicity of description, the linear map and its representation matrix are sometimes not distinguished. For example, the quantum gate may be denoted by G, the generator by L, and the generator error by $\delta L$.

In preparing the error-amplification circuit, a set $I_g$ of quantum gates as indicated in Expression (6) is provided by a user. Quantum gates included in the set $I_g$ are identified by unique numbers. Among $n_g$ different quantum gates, the first $n_{g,1}$ quantum gates are to be evaluated, and the remaining quantum gates are other than those to be evaluated.

$$I_g = \{\mathcal{G}_i\}_{i=1}^{n_g} \qquad (6)$$

The quantum gate sequence that forms the error-amplification circuit is a quantum circuit in which one or more (typically two or more) of the quantum gates included in the set $I_g$ are arranged in series. A quantum gate sequence a is defined as in Expression (7). In Expression (7), the length of the quantum gate sequence is m. Elements on the right-hand side of Expression (7) are numbers that identify respective quantum gates included in the set $I_g$. In the quantum gate sequence a, the same kind of quantum gate may appear two or more times.

$$a = \{i_1, i_2, \ldots, i_{m-1}, i_m\} \qquad (7)$$

When the composite quantum gate corresponding to the overall action of the quantum gate sequence a is denoted by G(a), G(a) is expanded as in Expression (8). Here, a product of three or more matrices is calculated in order from right to left. When the number of repetitions of the error-amplification circuit is denoted by N, the composite quantum gate corresponding to the overall action of the error-amplification circuit is denoted by $G(a)^N$.

$$\begin{aligned} G(a) &= G_{i_m} G_{i_{m-1}} \cdots G_{i_2} G_{i_1} \\ &= e^{L_{i_m}^{\mathrm{ideal}} + \delta L_{i_m}} e^{L_{i_{m-1}}^{\mathrm{ideal}} + \delta L_{i_{m-1}}} \cdots e^{L_{i_2}^{\mathrm{ideal}} + \delta L_{i_2}} e^{L_{i_1}^{\mathrm{ideal}} + \delta L_{i_1}} \end{aligned} \qquad (8)$$

In the second embodiment, the information processing apparatus 100 estimates the $n_{g,1}$ generator errors $\delta L$ indicated in Expression (9). In order to collect measurement values measured under various conditions, a set of quantum gate sequences a and a set of numbers of repetitions N indicated in Expression (10) are provided by a user. Regarding quantum gate sequences, $n_a$ different quantum gate sequences are provided. Regarding numbers of repetitions, $n_N$ different numbers of repetitions are provided for each quantum gate sequence.

$$\{\delta L_i\}_{i=1}^{n_{g,1}} \qquad (9)$$

$$\mathcal{A} = \{a_i\}_{i=1}^{n_a}, \ \mathcal{N}_i = \{N_{i,j}\}_{j=1}^{n_N} \qquad (10)$$

For the same quantum gate sequence, different numbers of repetitions N and N' provided satisfy the condition of Expression (11). The action when the ideal quantum gate sequence without errors is repeated N times coincides with the action when the quantum gate sequence is repeated N' times. As a result, it becomes easy to extract an amplified error component from measurement values with different numbers of repetitions.

$$[G(a)^{\mathrm{ideal}}]^N = [G(a)^{\mathrm{ideal}}]^{N'}, \ N, N' \in \mathcal{N}_i \qquad (11)$$

In addition, for each quantum gate sequence, a set of pairs of initialization $\rho$ and measurement $\Pi$ indicated in Expression (12) is provided by a user. This set includes $n_{t,i}$ pairs of initialization $\rho$ and measurement $\Pi$. Accordingly, the quantum computer 115 generates an initial quantum state by the initialization $\rho$, repeatedly executes the quantum gate sequence a N times, and acquires a measurement value by the measurement $\Pi$. The quantum computer 115 performs this experiment for all combinations of a, N, and ($\rho$, $\Pi$).

$$\mathcal{T}_i = \{(\rho_{i,k}, \amalg_{i,k})\}_{k=1}^{n_{t,i}} \qquad (12)$$

When vectorization of a matrix X with respect to a basis B is denoted by $|X\rangle\rangle$, the probability that a measurement value x is obtained in each experiment is calculated as in Expression (13). The matrix X is an element of a d×d-dimensional complex space, and the vector $|X\rangle\rangle$ is an element of a $d^2$-dimensional complex space. Hereinafter, i may be used as an identifier of the quantum gate sequence a, j as an identifier of the number of repetitions N, and k as an identifier of the pair of initialization and measurement ($\rho$, $\Pi$). By the nature of quantum computation, measurement values are obtained probabilistically; therefore, the quantum computer 115 acquires $n_{i,j,k}$ samples of measurement values for each (i, j, k).

$$p_x(i, j, k) = \langle\langle \Pi_{i,k,x} | G(a)^{N_j} | \rho_{i,k} \rangle\rangle \qquad (13)$$

When a frequency at which the measurement value x is obtained is denoted by $f_{i,j,k,x}$, a frequency distribution of Expression (14) is calculated for each (i, j, k). The frequency $f_{i,j,k,x}$ is calculated by dividing a number of samples in which the measurement value x is obtained by $n_{i,j,k}$.

$$f_{i,j,k} = \{f_{i,j,k,x}\}_x \qquad (14)$$

Following an experimental phase in which frequency distributions are collected as described above, the information processing apparatus 100 executes a data-processing phase that analyzes experimental data indicating the frequency distributions. The data-processing phase includes step #1, which extracts an amplified component from the experimental data; step #2, which linearly approximates the action of the error-amplification circuit; and step #3, which solves a numerical optimization problem formulated by using results of steps #1 and #2. However, step #1 and step #2 may be performed in reverse order. The information processing apparatus 100 may also omit step #2 by reusing the action of the error-amplification circuit calculated in past quantum tomography.

In step #1, the information processing apparatus 100 extracts, from the experimental data, a first-order component that is proportional to the number of repetitions N. The experimental data includes a constant component independent of the number of repetitions N, the first-order component proportional to the number of repetitions N, and a higher-order component of second order or higher with respect to the number of repetitions N. The ideal value of the generator corresponds to the constant component. The generator error amplified by the error-amplification circuit corresponds to the first-order component. A method for extracting the first-order component by an extrapolation method is described below.

The information processing apparatus 100 selects and fixes one combination of a quantum gate sequence a, a pair of initialization and measurement ($\rho$, $\Pi$), and a measurement value x. The information processing apparatus 100 performs a series expansion of a probability $p_x(i, j, k)$ with respect to the number of repetitions N, as in Expression (15). The probability $p_x(i, j, k)$ is the probability that the measurement value x is obtained under the experiment (i, j, k). A v-th expansion coefficient is $h_v$. Due to decomposition accuracy, the information processing apparatus 100 approximates the infinite series expansion of Expression (15) by a finite series expansion up to order $n_N - 1$.

$$p_x(i,j,k) = \sum_{\nu=0}^{\infty} h_\nu (N_j)^\nu \qquad (15)$$

Expression (16) indicates a vector that collects the probabilities $p_x(i, j, k)$ for $n_N$ numbers of repetitions. T denotes a transpose. By using a Vandermonde matrix V with respect to the number of repetitions N as in Expression (17), the finite series sum is represented as in Expression (18). The Vandermonde matrix V is a matrix composed of row vectors in which powers of N from the 0-th to the $(n_N - 1)$-th are arranged, and includes $n_N$ row vectors corresponding to $n_N$ numbers of repetitions. A coefficient vector h in Expression (18) is a vector in which expansion coefficients $h_\nu$ are arranged from order 0 to order $n_N - 1$.

$$\tilde{\boldsymbol{p}}_{i,k,x}^T = (p_x(i,j,k))_{j=1}^{n_N} \qquad (16)$$

$$V(\mathcal{N}_i) = \begin{bmatrix} 1 & N_1 & (N_1)^2 & \cdots & (N_1)^{n_N-1} \\ 1 & N_2 & (N_2)^2 & \cdots & (N_2)^{n_N-1} \\ \vdots & \vdots & \vdots & \ddots & \vdots \\ 1 & N_{n_N} & (N_{n_N})^2 & \cdots & (N_{n_N})^{n_N-1} \end{bmatrix} \qquad (17)$$

$$\tilde{\boldsymbol{p}}_{i,k,x} \approx V\boldsymbol{h} \qquad (18)$$

When the $n_N$ numbers of repetitions are mutually different, the Vandermonde matrix V is invertible. The coefficient vector h is calculated by using an inverse matrix of the Vandermonde matrix V as in Expression (19). In experiments using the quantum computer 115, frequencies $f_{i,j,k,x}$ corresponding to estimates of the probabilities $p_x(i, j, k)$ are measured. Accordingly, the information processing apparatus 100 uses the frequencies $f_{i,j,k,x}$ in place of the probabilities $p_x(i, j, k)$. Expression (20) indicates a vector that collects the frequencies $f_{i,j,k,x}$ for the $n_N$ numbers of repetitions. An estimate $h^{est}$ of the coefficient vector is calculated as in Expression (21). In this manner, the information processing apparatus 100 calculates expansion coefficients from order 0 to order $n_N - 1$ from the measured frequencies $f_{i,j,k,x}$.

$$\boldsymbol{h} \approx V^{-1}\tilde{\boldsymbol{p}}_{i,k,x} \qquad (19)$$

$$\tilde{\boldsymbol{f}}_{i,k,x}^T = (f_{i,j,k,x})_{j=1}^{n_N} \qquad (20)$$

$$\boldsymbol{h}^{est} = V^{-1}\tilde{\boldsymbol{f}}_{i,k,x} \qquad (21)$$

However, in place of the above method that uses the Vandermonde matrix V, the information processing apparatus 100 may calculate expansion coefficients by another method. For example, the information processing apparatus 100 may calculate the expansion coefficients by polynomial approximation using a least-squares method.

The second element of the coefficient vector h is the first-order component proportional to the number of repetitions N. The information processing apparatus 100 extracts the first-order component while changing the measurement value x. By aggregating first-order components for identical (i, k) with different measurement values x, the information processing apparatus 100 calculates a coefficient vector $h^{est}_1(i, k)$. The information processing apparatus 100 calculates this coefficient vector $h^{est}_1(i, k)$ for all (i, k).

In step #2, among errors of the $n_g$ generators, the information processing apparatus 100 parameterizes, collectively into a parameter v, errors of the $n_{g,1}$ generators that are targets of evaluation. The parameter v is a vector. A conversion from the $n_{g,1}$ generator errors to the parameter v may be any predefined affine transformation and may be specified by using a matrix. Since the $n_{g,1}$ generator errors are estimated from an optimal value of the parameter v as described later, this parameterization is specified so as to be invertible.

For each (i, k), the information processing apparatus 100 linearly approximates an action of the error-amplification circuit and generates a matrix $C_{i,k}$ that indicates a component proportional to the number of repetitions N. A product of the matrix $C_{i,k}$ and the parameter v indicates an influence of errors of the target generators on the first-order component of the experimental data.

In addition, among errors of the $n_g$ generators, the information processing apparatus 100 vectorizes errors of the generators that are not targets of evaluation in the same manner as the parameter v. The same transformation as that for errors of the target generators is used for this vectorization. The information processing apparatus 100 applies the matrix $C_{i,k}$ to this vector and generates a vector $b_{i,k}$. The vector $b_{i,k}$ indicates an influence of errors of the generators that are not targets of evaluation on the first-order component of the experimental data. Since errors of generators that are not targets of evaluation are provided by a user, elements of the vector $b_{i,k}$ are calculated as concrete numerical values. A linear approximation of an action of the error-amplification circuit will be described later.

In step #3, by using the coefficient vector $h^{est}_1(i, k)$ generated in step #1 and the matrix $C_{i,k}$ and the vector $b_{i,k}$ generated in step #2, the information processing apparatus 100 generates an objective function F(v) as indicated in Expression (22). $W_{i,k}$ is a weight matrix set by a user for (i, k). As indicated in Expression (23), the information processing apparatus 100 calculates a parameter $v^{est}$ that minimizes a value of the objective function F(v). The information processing apparatus 100 converts the parameter $v^{est}$ back to errors of the target generators.

$$F(\boldsymbol{v}) = \frac{1}{2} \sum_{i,k} ||C_{i,k}\boldsymbol{v} + \boldsymbol{b}_{i,k} - \boldsymbol{h}^{\mathrm{est}}_1(i, k)||^2_{W_{i,k}} \qquad (22)$$

$$\boldsymbol{v}^{\mathrm{est}} = \mathrm{argmin}_{\boldsymbol{v}:\mathrm{physical}} F(\boldsymbol{v}) \qquad (23)$$

The numerical optimization problem that solves Expression (23) is a least-squares fitting under physical constraints. The parameter $v^{est}$ is searched so as to satisfy physical constraints inherent in the generator errors. Since the parameter v is an affine parameterization of the generator errors, physical constraints to be satisfied by the parameter v are represented by linear semidefinite constraints. **In** addition, the objective function F(v) is a quadratic function of the parameter v. Therefore, this numerical optimization problem is formulated as a quadratic programming problem with semidefinite constraints and is solved by using a semidefinite programming solver.

Next, the linear approximation in step #2 will be described. As indicated in Expression (24), consider complex square matrices A, B, and P, each having a size of n × n. The matrix A is diagonalizable and corresponds to an ideal value of a generator. The matrix A is decomposed, by eigenvalue decomposition or spectral decomposition, as indicated in Expression (25). In Expression (25), V denotes a matrix containing eigenvectors as its column vectors, and Λ denotes a diagonal matrix having eigenvalues arranged on its diagonal. The symbol a denotes a complex number representing an eigenvalue, and the matrix P denotes a projection matrix corresponding to the eigenvalue a. The matrix A is decomposed into a sum of products of the eigenvalues a and projection matrices P.

$$A, B, P \in \mathbb{C}^{n \times n} \qquad (24)$$

$$A = V\Lambda V^{-1} = \oplus_j a_j P_j \qquad (25)$$

The projection matrix P satisfies Expression (26). $\delta_{jk}$ represents the Kronecker delta. When $j = k$, $\delta_{jk} = 1$, and when $j \neq k$, $\delta_{jk} = 0$. Therefore, the product of different projection matrices corresponding to different eigenvalues becomes a zero matrix, whereas the square of the same projection matrix results in the projection matrix itself.

$$P_j P_k = \delta_{jk} P_j \qquad (26)$$

Using the eigenvalues a and projection matrices P of the matrix A, six linear mappings with respect to the matrix B are defined as indicated in Expressions (27) to (32). $dcl_A$ represents decomposition to the left with respect to the matrix A. $dcr_A$ represents decomposition to the right with respect to the matrix A. $cml_A$ represents composition to the left with respect to the matrix A.

$cmr_A$ represents composition to the right with respect to the matrix A. $ssp_A$ represents a sum of spectral projections with respect to the matrix A. sspc$_A$ represents a sum of spectral projection complements with respect to the matrix A.

$$dcl_A(B) = \sum_{j,k} \ell_{jk} P_j B P_k \qquad (27)$$

$$dcr_A(B) = \sum_{j,k} \ell_{kj} P_j B P_k \qquad (28)$$

$$cml_A(B) = \sum_{j,k} \frac{1}{\ell_{jk}} P_j B P_k \qquad (29)$$

$$cmr_A(B) = \sum_{j,k} \frac{1}{\ell_{kj}} P_j B P_k \qquad (30)$$

$$ssp_A(B) = \sum_{i} P_i B P_i \qquad (31)$$

$$sspc_A(B) = \sum_{i,j(i\neq j)} P_i B P_j \qquad (32)$$

The coefficients used in Expressions (27) to (30) are defined as indicated in Expression (33). When the projection matrices P$_j$ and P$_k$ are identical, l$_{jk}$ = 1. When the projection matrices P$_j$ and P$_k$ differ, l$_{jk}$ is calculated from the eigenvalues a$_j$ and a$_k$ corresponding to the projection matrices P$_j$ and P$_k$. These six linear mappings may be expressed as matrices using an orthonormal basis in the n×n-dimensional complex space. The representation matrices of these six linear mappings are n$^2$×n$^2$ matrices and are denoted as indicated in Expression (34).

$$\ell_{jk} = \begin{cases} 1 & (j = k) \\ \frac{e^{a_j - a_k} - 1}{a_j - a_k} & (j \neq k) \end{cases} \qquad (33)$$

$$\mathrm{dcl}_A, \mathrm{dcr}_A, \mathrm{cml}_A, \mathrm{cmr}_A, \mathrm{ssp}_A, \mathrm{sspc}_A \in \mathbb{C}^{n^2 \times n^2} \qquad (34)$$

By using dcl in Expression (27), the matrix exponential of the sum of matrices A and B is calculated as indicated in Expression (35). The second term on the right-hand side represents higher-order components of the matrix B of second order or higher. Accordingly, the matrix exponential of the sum of the matrices A and B is linearly approximated by the first term on the right-hand side. Similarly, by using dcr in Expression (28), the matrix exponential of the sum of the matrices A and B is calculated as indicated in Expression (36). Therefore, the matrix exponential of the sum of matrices A and B may also be linearly approximated by the first term on the right-hand side.

$$e^{A+B} = e^{\mathrm{dcl}_A(B)} e^A + O(||B||^2) \qquad (35)$$

$$e^{A+B} = e^A e^{\mathrm{dcr}_A(B)} + O(||B||^2) \qquad (36)$$

Furthermore, by using cml in Expression (29), the product of the matrix exponential of the matrix A and the matrix exponential of the matrix B is calculated as indicated in Expression (37). Accordingly, the product of the matrix exponential of the matrix A and the matrix exponential of the matrix B is linearly approximated by the first term on the right-hand side. Similarly, by using cmr in Expression (30), the product of the matrix exponential of the matrix B and the matrix exponential of the matrix A is calculated as indicated in Expression (38). Accordingly, the product of the matrix exponential of the matrix B and the matrix exponential of the matrix A is linearly approximated by the first term on the right-hand side.

$$e^B e^A = e^{A+\mathrm{cml}_A(B)} + O(||B||^2) \qquad (37)$$

$$e^A e^B = e^{A+\mathrm{cmr}_A(B)} + O(||B||^2) \qquad (38)$$

By using the linear mappings in Expressions (27) to (30), the action of a composite quantum gate obtained by combining quantum gates $G_i$ and $G_{i'}$ is approximated as indicated in Expression (39). $L^{\mathrm{ideal}}$ denotes a composite generator corresponding to a matrix logarithm of the ideal value of the composite quantum gate, and is defined as indicated in Expression (40).

$$\begin{aligned} G_i G_{i'} &= e^{L_i^{\mathrm{ideal}}+\delta L_i} e^{L_{i'}^{\mathrm{ideal}}+\delta L_{i'}} \\ &\approx e^{L^{\mathrm{ideal}}+cml_{L^{\mathrm{ideal}}}(dcl_{L_i^{\mathrm{ideal}}}(\delta L_i))+cmr_{L^{\mathrm{ideal}}}(dcr_{L_{i'}^{\mathrm{ideal}}}(\delta L_{i'}))} \end{aligned} \qquad (39)$$

$$L^{\mathrm{ideal}} = \ln(e^{L_i^{\mathrm{ideal}}} e^{L_{i'}^{\mathrm{ideal}}}) \qquad (40)$$

Accordingly, the generator error $\delta L_i$ of the quantum gate $G_i$ changes through the composite quantum gate as indicated in Expression (41). In Expression (41), the change of $\delta L_i$ is linearly approximated using the linear mappings $dcl_L$ and $cml_L$. Similarly, the generator error $\delta_{L_{i'}}$ of the quantum gate $G_{i'}$ changes through the composite quantum gate as indicated in Expression (42). In Expression (42), the change of $\delta_{L_{i'}}$ is linearly approximated using the linear mappings $dcl_L$ and $cml_L$. Expression (43) represents a matrix expression of the change in $\delta L_i$ indicated by Expression (41). Expression (44) represents a matrix expression of the change in $\delta_{L_{i'}}$ indicated by Expression (42).

$$\delta L_i \mapsto cml_{L^{\mathrm{ideal}}}\big(dcl_{L_i^{\mathrm{ideal}}}(\delta L_i)\big) \qquad (41)$$

$$\delta L_{i'} \mapsto cmr_{L^{\mathrm{ideal}}}\big(dcr_{L_{i'}^{\mathrm{ideal}}}(\delta L_{i'})\big) \qquad (42)$$

$$\mathrm{cml}_{L^{\mathrm{ideal}}} \cdot \mathrm{dcl}_{L_i^{\mathrm{ideal}}} \qquad (43)$$

$$\mathrm{cmr}_{L^{\mathrm{ideal}}} \cdot \mathrm{dcr}_{L_{i'}^{\mathrm{ideal}}} \qquad (44)$$

When the quantum gate sequence includes three or more quantum gates, the information processing apparatus 100 combines the quantum gates one by one from the first toward the last. The information processing apparatus 100 first combines the first quantum gate with the second quantum gate. Next, the information processing apparatus 100 combines the resulting composite quantum gate with the third quantum gate. By repeatedly performing such combinations, the information processing apparatus 100 generates a composite quantum gate corresponding to the entire quantum gate sequence. As a result, the change of the generator error through the quantum gate sequence is linearly approximated.
Next, the information processing apparatus 100 calculates the action of repetition of the quantum gate sequence. Repeating a quantum gate G N times is defined as indicated in Expression (45). The composite quantum gate obtained through the combination of the quantum gate sequence generally takes the form of $e^{A+B}$. Assuming that a constant c exists such that mod(nA) = cA, the repetition N times of this composite quantum gate is defined as indicated in Expression (46) using ssp and sspc in Expressions (31) and (32). The constant c is independent of the number of repetitions N. The first term on the right-hand side represents a first-order component with respect to the matrix B, and the second term represents higher-order components of second order or higher with respect to the matrix B.

$$G^N = \left[ e^{L^{\mathrm{ideal}}+\delta L} \right]^N \tag{45}$$

$$\left[ e^{A+B} \right]^N = e^{c \cdot A + c \cdot \mathrm{sspc}_A(B) + N \cdot \mathrm{ssp}_A(B)} + O(||B||^2) \tag{46}$$

Accordingly, the generator error $\delta L_i$ of the quantum gate G changes through the N repetitions as indicated in Expression (47). In Expression (47), the change of $\delta L_i$ is linearly approximated using the linear mappings ssp and sspc. The first term on the right-hand side represents a component that is not amplified through the N repetitions, and the second term on the right-hand side represents a first-order component proportional to the number of repetitions N. Expression (48) represents a matrix expression of an action that does not amplify $\delta L_i$ during the N repetitions, and Expression (49) represents a matrix expression of an action that amplifies $\delta L_i$ during the N repetitions.

$$\delta L_i \mapsto c \cdot sspc_{L_i^{\mathrm{ideal}}}(\delta L_i) + N \cdot ssp_{L_i^{\mathrm{ideal}}}(\delta L_i) \tag{47}$$

$$\mathrm{sspc}_{L_i^{\mathrm{ideal}}} \tag{48}$$

$$\mathrm{ssp}_{L_i^{\mathrm{ideal}}} \tag{49}$$

Finally, for the error amplification circuit in which the quantum gate sequence is repeated N times, the information processing apparatus 100 calculates the action on generator errors by integrating the action of combination of quantum gates and the action of repetition of the quantum gate sequence. The information processing apparatus 100 generates, as described above, a matrix expression of the action of combination and a matrix expression of the action of repetition, and left-multiplies the matrix expression of the action of combination by the matrix expression of the action of repetition.

In this way, the information processing apparatus 100 linearly approximates an amplifying action by which the error amplification circuit amplifies generator errors. This amplifying action is an action in the space of generators. In numerical optimization using the objective function F(v), the information processing apparatus 100 converts the action in the space of generators into an action in the space of probability distributions of measurement values.

The information processing apparatus 100 generates a transformation matrix U by rearranging elements of matrix expressions of initialization $\rho$ and measurement $\Pi$ used in experiments, and left-multiplies the matrix expression of the error amplification circuit by the transformation matrix U. The matrix expressions of initialization $\rho$ and measurement $\Pi$ used here include known or assumed errors concerning $\rho$ and $\Pi$, and may be referred to as model values. Accordingly, matrices $C_{i,k}$ included in the objective function F(v) are calculated. In addition, by applying the matrices $C_{i,k}$ to generator errors that are not to be evaluated, vectors $b_{i,k}$ are calculated.

Here, the matrices $C_{i,k}$ and vectors $b_{i,k}$ are further described. The probability px(i, j, k) indicated in Expression (13) is linearly approximated as indicated in Expression (50). The amplification component proportional to the number of repetitions N is rewritten as indicated in Expressions (51) and (52). In Expressions (50) to (52), the script letter F represents a mapping describing a first-order approximation of the action integrating the combination and repetition of quantum gates. The F in the last line of Expression (52) represents a matrix expression of this mapping.

$$p_x(i, j, k) \approx \langle\langle \Pi_{i,k,x} | I + N_j \cdot \sum_{i_g} \mathcal{F}_{i,i_g}(\delta L_{i_g}) | \rho_{i,k} \rangle\rangle \tag{50}$$

$$\langle\langle\Pi_{i,k,x}| \sum_{i_g} \mathcal{F}_{i,i_g}(\delta L_{i_g})|\rho_{i,k}\rangle\rangle$$

$$= \mathrm{Tr}\left[|\rho_{i,k}\rangle\rangle\langle\langle\Pi_{i,k,x}| \sum_{i_g} \mathcal{F}_{i,i_g}(\delta L_{i_g})\right] \qquad (51)$$

$$= \mathrm{Tr}\left[(|\Pi_{i,k,x}\rangle\rangle\langle\langle\rho_{i,k}|)^{\dagger} \sum_{i_g} \mathcal{F}_{i,i_g}(\delta L_{i_g})\right]$$

$$\langle\langle\Pi_{i,k,x}| \sum_{i_g} \mathcal{F}_{i,i_g}(\delta L_{i_g})|\rho_{i,k}\rangle\rangle$$

$$= \mathrm{vec}(|\Pi_{i,k,x}\rangle\rangle\langle\langle\rho_{i,k}|)^{\dagger}\mathrm{vec}\left(\sum_{i_g} \mathcal{F}_{i,i_g}(\delta L_{i_g})\right) \qquad (52)$$

$$= \mathrm{vec}(|\Pi_{i,k,x}\rangle\rangle\langle\langle\rho_{i,k}|)^{\dagger} \sum_{i_g} F_{i,i_g}\mathrm{vec}(\delta L_{i_g})$$

Regarding the action of initialization $\rho$ and measurement $\Pi$, as indicated in Expression (53), the matrix $E_{i,k}$ obtained by vertically concatenating a plurality of vectors is introduced. When true values of $\rho_{i,k}$ and $\Pi_{i,k,x}$ are known, the matrix $E_{i,k}$ is calculated from the true values. When the true values of $\rho_{i,k}$ and $\Pi_{i,k,x}$ are unknown, the matrix $E_{i,k}$ is calculated from model values of $\rho_{i,k}$ and $\Pi_{i,k,x}$.

$$E_{i,k} = \begin{bmatrix} \vdots \\ \mathrm{vec}(|\Pi_{i,k,x}\rangle\rangle\langle\langle\rho_{i,k}|)^{\dagger} \\ \vdots \end{bmatrix} \qquad (53)$$

The matrix $F_i$ indicated in Expression (54) represents a portion of the amplifying action that acts on generator errors to be evaluated. By using the matrices indicated in Expressions (53) and (54), the matrix $C_{i,k}$ indicating a first-order approximation of the action in the space of probability distributions is defined as indicated in Expression (55). Furthermore, the vector $b_{i,k}$ concerning generator errors not to be evaluated is defined as indicated in Expression (56).

$$F_i = \left[F_{i,1}| \cdots |F_{i,n_{g,1}}\right] \qquad (54)$$

$$C_{i,k} = E_{i,k}F_i \qquad (55)$$

$$b_{i,k} = E_{i,k} \sum_{i_g=n_{g,1}+1}^{n_g} F_{i,i_g}\mathrm{vec}(\delta L_{i_g}) \qquad (56)$$

Next, an improvement of the linear approximation in step #2 is described. The linear approximation of the action of the quantum gate sequence uses the linear mappings cml indicated in Expression (29) and cmr indicated in Expression (30). The linear mappings cml and cmr include reciprocals of coefficients $l_{jk}$ indicated in Expression (33).

Here, there exists a quantum gate whose ideal generator has different eigenvalues $a_j$ and $a_k$, and for $\exp(a_j)$ and $\exp(a_k)$ take the same value. When the eigenvalues $a_j$ and $a_k$ are complex numbers, $\exp(a_j)$ and $\exp(a_k)$ may take the same value, as indicated in Expression (57). An example of such a quantum gate is a 180-degree rotation gate ($\pi$-pulse gate).

In this case, $l_{jk} = 0$, and its reciprocal becomes infinite, whereby the values of the linear mappings cml and cmr become indeterminate. This indicates that, at a point corresponding to a generator in the space of generators, a differential mapping of the exponential mapping has a zero eigenvalue. Such a point on the space of generators may be referred to as a singular point or a critical point. At the singular point, the linear approximation of the action of the quantum gate sequence is regarded as having broken down. When the quantum gate sequence includes a quantum gate corresponding to a singular point, or when a combined quantum gate corresponding to a singular point is generated during combination, the above linear approximation method does not calculate the action of the error amplification circuit.

$$e^{a_j - a_k} - 1 = 0 \iff e^{a_j} = e^{a_k} \qquad (57)$$

At the singular point, the action of the linear mapping cml is formally decomposed as indicated in Expression (58). The first term on the right-hand side represents a component calculated from combinations of eigenvalues for which $l_{jk} \neq 0$. The second term on the right-hand side represents a component calculated from combinations of eigenvalues for which $l_{jk} = 0$. Similarly, the action of the linear mapping cmr is decomposed into components for which $l_{kj} \neq 0$ and components for which $l_{kj} = 0$. Therefore, the information processing apparatus 100 eliminates portions such as the second term on the right-hand side, which are affected by divergence at the singular point, and constructs a linear approximation function of portions such as the first term on the right-hand side, which are unaffected by divergence. The information processing apparatus 100 estimates components of generator errors that are unaffected by divergence, using this linear approximation function.

$$cml_{L^{\mathrm{ideal}}}(\delta L) = \sum_{j,k:\ell_{jk} \neq 0} \frac{1}{\ell_{jk}} P_j \delta L P_k + \sum_{j,k:\ell_{jk} = 0} \frac{1}{0} P_j \delta L P_k \qquad (58)$$

According to a logical analysis conducted by the inventors of the present application, components of generator errors affected by divergence at the singular point correspond to portions describing dissipation of qubit information. Components arising from control of quantum operations are unaffected by divergence. Therefore, the estimated values of components unaffected by divergence represent important information for calibration of a quantum computer.

Expression (59) indicates a set of ideal values of generators corresponding to quantum gates. For each ideal value of a generator, a Hamiltonian $H_i$ is defined. The quantum gate G, the generator L, and the Hamiltonian H are mutually convertible through specific transformation expressions.

$$\mathbb{L}^{\mathrm{ideal}} = \left\{ L_i^{\mathrm{ideal}} \right\}_{i=1}^{n_g} \qquad (59)$$

The information processing apparatus 100 executes the following processing for each quantum gate sequence a of length m. First, the information processing apparatus 100 calculates ideal values of Hamiltonians for composite quantum gates generated during the combination of quantum gates included in the quantum gate sequence a. Let $H^{(1)}$ be the ideal value of the Hamiltonian of the first quantum gate ($i_1$). The ideal value $H^{(1,2)}$ of the Hamiltonian corresponding to a composite quantum gate obtained by combining the first quantum gate and the second quantum gate ($i_2$) is calculated as indicated in Expression (60).

$$-iH^{(1,2)} = \ln\left(e^{-iH_{i2}} e^{-iH_{i1}}\right) \qquad (60)$$

Subsequently, the information processing apparatus 100 synthesizes the Hamiltonian $H^{(1,2)}$ with the Hamiltonian of the third quantum gate ($i_3$) to generate a Hamiltonian $H^{(1,2,3)}$. The information processing apparatus 100 repeats the synthesis of Hamiltonians up to the m-th quantum gate. As a result, a Hamiltonian sequence indicated in Expression (61) is generated.

$$\mathbb{H} = \left\{ H^{(1)}, H^{(1,2)}, H^{(1,2,3)}, \ldots, H^{(1,\ldots,m)} \right\} \qquad (61)$$

Next, the information processing apparatus 100 converts ideal values of Hamiltonians in the combination process into ideal values of generators. The action of the generator corresponding to the Hamiltonian H on the matrix X is defined as indicated in Expression (62). The mapping [X, Y] defined for a pair of square matrices (X, Y) is sometimes referred to as a commutator, and is given by [X, Y] = XY - YX. Accordingly, components of the matrix expression L of generators under the basis B indicated in Expression (2) are calculated as indicated in Expression (63).

$$\mathcal{L}(X) = -i(HX - XH) = -i[H, X] \qquad (62)$$

$$L_{\alpha\beta} = \mathrm{Tr}[B_\alpha^\dagger \mathcal{L}(B_\beta)] = i \cdot \mathrm{Tr}[[B_\alpha^\dagger, B_\beta]H] \qquad (63)$$

When a generator corresponding to the Hamiltonian $H^{(1,\cdots,t)}$ obtained by combination up to the t-th quantum gate is denoted as $L^{(1,\cdots,t)}$, the Hamiltonian sequence indicated in Expression (61) is converted into the generator sequence indicated in Expression (64). The reason for calculating generators through Hamiltonians is to ensure numerical stability when singular points exist.

$$\mathbb{L} = \left\{ L^{(1)}, L^{(1,2)}, L^{(1,2,3)} \ldots, L^{(1,\cdots,m)} \right\} \qquad (64)$$

Next, the information processing apparatus 100 determines singular points affected by the quantum gate sequence, based on the set of generators indicated in Expression (59) and the generator sequence indicated in Expression (64). The information processing apparatus 100 performs spectral decomposition on each generator $L_i$ included in the set indicated in Expression (59) and calculates the coefficients $I_{jk}$ indicated in Expression (33) for each pair of eigenvalues. As indicated in Expression (65), the information processing apparatus 100 specifies, for each generator $L_i$, a set $S_i$ of (j, k) satisfying $I_{jk} = 0$. When $S_i$ is not an empty set, the generator $L_i$ is at a singular point. Expression (66) indicates a set of $S_i$ corresponding to $n_g$ generators included in the set indicated in Expression (59).

$$S_i = \{(j, k) | \ell_{jk}(L_i) = 0\} \qquad (65)$$

$$\mathbb{S} = \{S_i\}_{i=1}^{n_g} \qquad (66)$$

The information processing apparatus 100 also performs spectral decomposition on each generator $L^{(1,\cdots,t)}$ included in the generator sequence indicated in Expression (64) and calculates coefficients $I_{jk}$ indicated in Expression (33) for each pair of eigenvalues. As indicated in Expression (67), the information processing apparatus 100 specifies, for each generator $L^{(1,\cdots,t)}$, a set $T^{(1,\cdots,t)}$ of (j, k) satisfying $I_{jk} = 0$. Expression (68) indicates a set of $T^{(1,\cdots,t)}$ corresponding to m generators included in the generator sequence indicated in Expression (64).

$$T^{(1,\cdots,t)} = \{(j, k) | \ell_{jk}(L^{(1,\cdots,t)}) = 0\} \qquad (67)$$

$$\mathbb{T} = \{T^{(1,\cdots,t)}\}_{t=1}^{m} \qquad (68)$$

Next, the information processing apparatus 100 identifies a subspace affected by the singular points identified above within the space of generators.

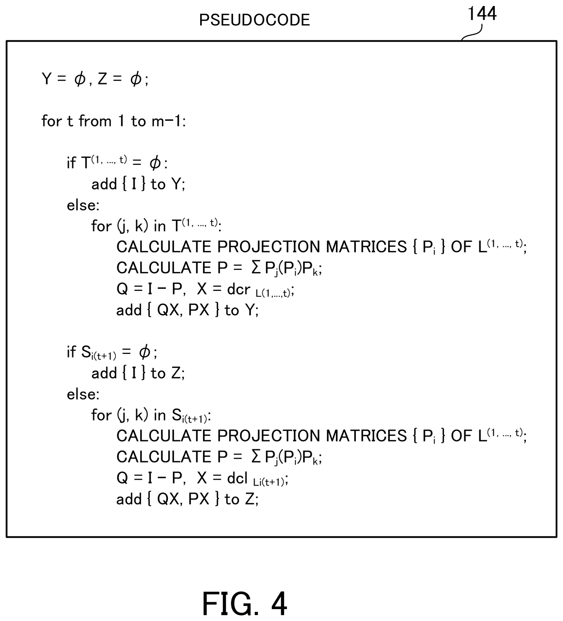

FIG. 4 illustrates an example of pseudocode for identifying a subspace affected by singular points. Pseudocode 144 represents an algorithm for identifying a subspace affected by singular points. First, the information processing apparatus 100 initializes the sets Y and Z as empty sets. Elements of the sets Y and Z are matrices. The information processing apparatus 100 repeats the following process for t = 1 to t = m - 1.

The information processing apparatus 100 reads the t-th set $T^{(1,\cdots,t)}$ from Expression (68) and determines whether the set $T^{(1,\cdots,t)}$ is an empty set. When the set $T^{(1,\cdots,t)}$ is an empty set, the information processing apparatus 100 adds an identity matrix I to the set Y. The condition that the set $T^{(1,\cdots,t)}$ is an empty set indicates that the generator $L^{(1,\cdots,t)}$ is not at a singular point.

On the other hand, when the set $T^{(1,\cdots,t)}$ is not empty, the information processing apparatus 100 reads pairs (j, k) one by one from the set $T^{(1,\cdots,t)}$ and performs the following processing for each pair (j, k). The information processing apparatus 100 performs spectral decomposition on the generator $L^{(1,\cdots,t)}$ and calculates the set {$P_j$} of projection matrices

corresponding to the generator $L^{(1,...,t)}$. The projection matrix $P_i$ may be referred to as a spectral projection.

The information processing apparatus 100 identifies projection matrices $P_j$ and $P_k$ corresponding to a pair (j, k) in the set $T^{(1,...,t)}$. For each projection matrix $P_i$, the information processing apparatus 100 multiplies $P_j$ from the left and $P_k$ from the right, and calculates a matrix P by adding all the resulting products obtained for all projection matrices $P_i$. The information processing apparatus 100 then calculates a matrix Q as Q = I - P.

The information processing apparatus 100 also calculates, as a matrix X, a representation matrix of the linear mapping dcr using the generator $L^{(1,...,t)}$. The information processing apparatus 100 calculates matrices QX and PX and adds them to the set Y The matrix QX represents a component not affected by the singular points and corresponds to the first term on the right-hand side of Expression (58), whereas the matrix PX represents a component affected by the singular points and corresponds to the second term on the right-hand side.

After the elements of the set $T^{(1,...,t)}$ have been processed, the information processing apparatus 100 reads a set $S_{i(t+1)}$ corresponding to a generator $L_{i(t+1)}$ of the (t + 1)-th quantum gate in a quantum gate sequence a from Expression (66) and determines whether the set $S_{i(t+1)}$ is an empty set. When the set $S_{i(t+1)}$ is an empty set, the information processing apparatus 100 adds an identity matrix I to the set Z. The fact that the set $S_{i(t+1)}$ is an empty set indicates that the generator $L_{i(t+1)}$ is not at a singular point.

On the other hand, when the set $S_{i(t+1)}$ is not an empty set, the information processing apparatus 100 reads pairs (j, k) one by one from the set $S_{i(t+1)}$ and performs the following processing for each pair (j, k). The information processing apparatus 100 performs spectral decomposition on the generator $L^{(1,...,t)}$ and calculates a set $\{P_i\}$ of projection matrices of the generator $L^{(1,...,t)}$. When the set $\{P_i\}$ has already been calculated during processing of the set $T^{(1,...,t)}$, the information processing apparatus 100 may reuse that set $\{P_i\}$.

The information processing apparatus 100 identifies projection matrices $P_j$ and $P_k$ corresponding to a pair (j, k) in the set $S_{i(t+1)}$. For each projection matrix $P_i$, the information processing apparatus 100 multiplies $P_j$ from the left and $P_k$ from the right, and calculates a matrix P by adding all the resulting products for all projection matrices $P_i$. The information processing apparatus 100 then calculates a matrix Q as Q = I - P.

The information processing apparatus 100 also calculates, as a matrix X, a representation matrix of the linear mapping dcl using the generator $L_{i(t+1)}$. The information processing apparatus 100 calculates matrices QX and PX and adds them to the set Z. The matrix QX represents a component not affected by the singular points and corresponds to the first term on the right-hand side of Expression (58), whereas the matrix PX represents a component affected by the singular points and corresponds to the second term on the right-hand side.

The sets Y and Z described above represent subspaces affected by singular points at each stage of composition of quantum gates. Next, the information processing apparatus 100 identifies a subspace affected by singular points after the completion of composition of the quantum gate sequence, by using the sets Y and Z.

First, as indicated in Expression (69), the information processing apparatus 100 arranges matrices included in the set Y to generate a set Y'. The set Y' is formed by arranging m' matrices. Likewise, as indicated in Expression (69), the information processing apparatus 100 arranges matrices included in the set Z to generate a set Z'. The set Z' is formed by arranging m' matrices.

$$\mathcal{Y}' = \{\{Y_{i_t} \in \mathcal{Y}_t\}_{t=1}^m\}_{i_1,...,i_{m'}}, \ \ \mathcal{Z}' = \{\{Z_{i_t} \in \mathcal{Z}_t\}_{t=1}^m\}_{i_1,...,i_{m'}} \qquad (69)$$

The information processing apparatus 100 generates all combinations between the elements of the set Y' and those of the set Z'. The information processing apparatus 100 uses the elements of the set Y' as matrices in place of the linear mappings cmr and dcr indicated in Expression (44), and uses the elements of the set Z' as matrices in place of the linear mappings cml and dcl indicated in Expression (43).

By substituting Expressions (43) and (44) and calculating the amplification action through composition and repetition of quantum gates as described above, the information processing apparatus 100 generates a matrix C. The matrix C represents the action in the space of generators before conversion into the space of probability distributions of measurement values. From the set of matrices C calculated for all combinations, the information processing apparatus 100 removes a matrix $C_0$ that is not affected by singular points. The matrix $C_0$ is calculated from combinations of the matrices QX described above.

That is, the sets Y' and Z' are formed by elements obtained by applying the matrix Q and elements obtained by applying the matrix P in the pseudocode 144. Since the matrix P is a projection matrix onto a subspace related to singular points, elements obtained by applying the matrix Q correspond to an action within a subspace unrelated to singular points. Accordingly, the matrix $C_0$ corresponds to a matrix calculated from combinations of elements obtained by applying the matrix Q among combinations of the elements of the set Y' and the elements of the set Z'.

Using the remaining matrices C obtained by removing the matrix $C_0$, the information processing apparatus 100 calculates a matrix $X_{in}$ as indicated in Expression (70). The information processing apparatus 100 calculates a matrix $R_{in}$ representing an orthogonal projection onto the support of the matrix $X_{in}$. The matrix $R_{in}$ represents an orthogonal projection onto an eigenspace corresponding to nonzero eigenvalues of the matrix $X_{in}$ and may be calculated, for example, by numerically diagonalizing the matrix $X_{in}$. The matrix $R_{in}$ projects generator errors onto a subspace affected by singular points within the space of generators.

$$X_{in} = \sum_{C \in \mathbb{C}'} C^T C \qquad (70)$$

Next, the information processing apparatus 100 identifies a subspace that is unaffected by singular points after completion of composition of a quantum gate sequence. Here, the information processing apparatus 100 calculates, as indicated in Expression (71), a projection $W_{in}$ onto orthogonal complement subspace with respect to the subspace affected by singular points in the space of generators. This orthogonal complement subspace is a subspace unaffected by singular points.

$$W_{in} = I - R_{in} \qquad (71)$$

The transformation matrix U represents a transformation from the space of generators to the space of probability distributions of measurement values. The information processing apparatus 100 calculates a matrix $X_{out}$ as indicated in Expression (72) by using the matrix C and the transformation matrix U. The information processing apparatus 100 calculates a matrix $R_{out}$ representing an orthogonal projection onto the support of the matrix $X_{out}$. The matrix $R_{out}$ represents an orthogonal projection onto an eigenspace corresponding to nonzero eigenvalues of the matrix $X_{out}$ and may be calculated, for example, by numerically diagonalizing the matrix $X_{out}$. The matrix $R_{out}$ represents a projection onto a subspace affected by singular points in the space of probability distributions of measurement values. The information processing apparatus 100 calculates, as indicated in Expression (73), a projection $W_{out}$ onto the orthogonal complement subspace with respect to the subspace affected by singular points in the space of probability distributions of measurement values.

$$X_{out} = \sum_{C \in \mathbb{C}'} U C C^T U^T \qquad (72)$$

$$W_{out} = I - R_{out} \qquad (73)$$

Finally, the action from the subspace unaffected by singular points in the space of generators to the subspace unaffected by singular points in the space of probability distributions of measurement values is linearly approximated by a matrix indicated in Expression (74). For each combination of a quantum gate sequence a, an initialization $\rho$, and a measurement $\Pi$, the information processing apparatus 100 calculates matrices $W_{in}$, $W_{out}$, U, and $C_0$. The information processing apparatus 100 replaces the objective function F(v) in Expression (22) with a new objective function F(v) indicated in Expression (75) and searches for the value of the parameter v that minimizes the value of the replaced objective function F(v).

$$W_{out} U C_0 W_{in} \qquad (74)$$

$$F(\boldsymbol{v}) = \frac{1}{2} \sum_{i,k} \| W_{out,i,k} U_{i,k} C_{0,i,k} W_{in,i,k} \boldsymbol{v}$$
$$+ W_{out,i,k} U_{i,k} \boldsymbol{b}_{i,k} - W_{out,i,k} \boldsymbol{h}_1^{est}(i,k) \|_{W_{i,k}}^2 \qquad (75)$$

Next, a numerical example of matrices used in the above calculation will be described. Here, a quantum gate sequence in which an X180 gate is applied after a Z90 gate is applied is considered. The X180 gate and the Z90 gate each act on a single-qubit system with d = 2. The X180 gate is a quantum gate that performs a 180-degree rotation around the X axis and is an example of a quantum gate corresponding to a singular point. The Z90 gate is a quantum gate that performs a 90-degree rotation around the Z axis. The X180 gate is a quantum gate to be evaluated, whereas the Z90 gate is a quantum gate other than those to be evaluated.

First, as indicated in Expression (76), 2×2 matrices $\sigma_0$, $\sigma_1$, $\sigma_2$, and $\sigma_3$, which are referred to as Pauli matrices, are defined. By using these matrices $\sigma_0$, $\sigma_1$, $\sigma_2$, and $\sigma_3$, the Pauli basis indicated in Expression (77) is selected as the basis for matrix representations of quantum gates and generators.

$$\sigma_0 = \begin{bmatrix} 1 & 0 \\ 0 & 1 \end{bmatrix}, \; \sigma_1 = \begin{bmatrix} 0 & 1 \\ 1 & 0 \end{bmatrix}, \; \sigma_2 = \begin{bmatrix} 0 & -i \\ i & 0 \end{bmatrix}, \; \sigma_3 = \begin{bmatrix} 1 & 0 \\ 0 & -1 \end{bmatrix} \quad (76)$$

$$B_\alpha = \sigma_\alpha/\sqrt{2}, \; \alpha \in \{0,1,2,3\} \quad (77)$$

Furthermore, as a basis for vector representations of quantum gates and generators, the basis S defined by a set of $S_1$ to $S_{16}$ indicated in Expressions (78) to (91) is selected. In Expressions (78) to (91), an overline on B represents a complex conjugate, and a multiplication operator represents a tensor product.

$$S_1 = \frac{i}{\sqrt{2}}(B_0 \otimes \overline{B}_1 - B_1 \otimes \overline{B}_0) \quad (78)$$

$$S_2 = \frac{i}{\sqrt{2}}(B_0 \otimes \overline{B}_2 - B_2 \otimes \overline{B}_0) \quad (79)$$

$$S_3 = \frac{i}{\sqrt{2}}(B_0 \otimes \overline{B}_3 - B_3 \otimes \overline{B}_0) \quad (80)$$

$$S_4 = B_1 \otimes \overline{B}_1, \;\; S_5 = B_2 \otimes \overline{B}_2, \;\; S_6 = B_3 \otimes \overline{B}_3 \quad (81)$$

$$S_7 = \frac{i}{\sqrt{2}}(B_1 \otimes \overline{B}_2 + B_2 \otimes \overline{B}_1) \quad (82)$$

$$S_8 = \frac{i}{\sqrt{2}}(B_1 \otimes \overline{B}_3 + B_3 \otimes \overline{B}_1) \quad (83)$$

$$S_9 = \frac{i}{\sqrt{2}}(B_2 \otimes \overline{B}_3 + B_3 \otimes \overline{B}_2) \quad (84)$$

$$S_{10} = \frac{i}{\sqrt{2}}(B_1 \otimes \overline{B}_2 - B_2 \otimes \overline{B}_1) \quad (85)$$

$$S_{11} = \frac{i}{\sqrt{2}}(B_1 \otimes \overline{B}_3 - B_3 \otimes \overline{B}_1) \quad (86)$$

$$S_{12} = \frac{i}{\sqrt{2}}(B_2 \otimes \overline{B}_3 - B_3 \otimes \overline{B}_2) \qquad (87)$$

$$S_{13} = B_0 \otimes \overline{B}_0 \qquad (88)$$

$$S_{14} = \frac{1}{\sqrt{2}}(B_0 \otimes \overline{B}_1 + B_1 \otimes \overline{B}_0) \qquad (89)$$

$$S_{15} = \frac{1}{\sqrt{2}}(B_0 \otimes \overline{B}_2 + B_2 \otimes \overline{B}_0) \qquad (90)$$

$$S_{16} = \frac{1}{\sqrt{2}}(B_0 \otimes \overline{B}_3 + B_3 \otimes \overline{B}_0) \qquad (91)$$

For the Hamiltonian H, which is an ideal value of the Hamiltonian of the X180 gate to be evaluated, the ideal value is given as indicated in Expression (92). The ideal action of the X180 gate on a quantum state ρ is given using the ideal value H as indicated in Expression (93).

$$H = \frac{\pi}{2}\sigma_1 = \frac{\pi}{2}\begin{bmatrix} 0 & 1 \\ 1 & 0 \end{bmatrix} \qquad (92)$$

$$\mathcal{G}(\rho) = e^{-iH}\rho e^{iH} = \sigma_1 \rho \sigma_1, \ \forall \rho \in \mathbb{C}^{2 \times 2} \qquad (93)$$

The representation matrix G corresponding to Expression (93) under the basis of Expression (77) is a 4×4 complex matrix and is given as indicated in Expression (94). The representation matrix L, which is an ideal value of a generator corresponding to the representation matrix G of the ideal value of the quantum gate, is calculated as indicated in Expression (95). The representation matrix L in Expression (95) has eigenvalues $\alpha_1$, $\alpha_2$, and $\alpha_3$ as indicated in Expression (96). Expression (97) indicates a projection matrix $P_1$ corresponding to the eigenvalue $\alpha_1$. Expression (98) indicates a projection matrix $P_2$ corresponding to the eigenvalue $\alpha_2$. Expression (99) indicates a projection matrix $P_3$ corresponding to the eigenvalue $\alpha_3$.

$$G = \begin{bmatrix} 1 & 0 & 0 & 0 \\ 0 & 1 & 0 & 0 \\ 0 & 0 & -1 & 0 \\ 0 & 0 & 0 & -1 \end{bmatrix} \qquad (94)$$

$$L = \pi \cdot \begin{bmatrix} 0 & 0 & 0 & 0 \\ 0 & 0 & 0 & 0 \\ 0 & 0 & 0 & -1 \\ 0 & 0 & 1 & 0 \end{bmatrix} \qquad (95)$$

$$\alpha_1 = 0, \ \alpha_2 = \pi i, \ \alpha_3 = -\pi i \qquad (96)$$

$$P_1 = \begin{bmatrix} 1 & 0 & 0 & 0 \\ 0 & 1 & 0 & 0 \\ 0 & 0 & 0 & 0 \\ 0 & 0 & 0 & 0 \end{bmatrix} \qquad (97)$$

$$P_2 = \begin{bmatrix} 0 & 0 & 0 & 0 \\ 0 & 0 & 0 & 0 \\ 0 & 0 & 1/2 & i/2 \\ 0 & 0 & -i/2 & 1/2 \end{bmatrix} \qquad (98)$$

$$P_3 = \begin{bmatrix} 0 & 0 & 0 & 0 \\ 0 & 0 & 0 & 0 \\ 0 & 0 & 1/2 & -i/2 \\ 0 & 0 & i/2 & 1/2 \end{bmatrix} \qquad (99)$$

The information processing apparatus 100 comprehensively calculates coefficients $I_{jk}$ indicated in Expression (33) for combinations of the eigenvalues $\alpha_1$, $\alpha_2$, and $\alpha_3$. Expression (100) indicates a matrix I in which the calculated coefficients $I_{jk}$ are arranged. The first row and the first column of the matrix I correspond to the eigenvalue $\alpha_1$, the second row and the second column correspond to the eigenvalue $\alpha_2$, and the third row and the third column correspond to the eigenvalue $\alpha_3$. As indicated in Expression (101), $I_{jk} = 0$ for eigenvalue pairs $(\alpha_2, \alpha_3)$ and $(\alpha_3, \alpha_2)$. Therefore, the X180 gate has a singular point.

$$\ell = \begin{bmatrix} 1 & -i\frac{2}{\pi} & i\frac{2}{\pi} \\ i\frac{2}{\pi} & 1 & 0 \\ -i\frac{2}{\pi} & 0 & 1 \end{bmatrix} \qquad (100)$$

$$\ell_{23} = \ell_{32} = 0 \qquad (101)$$

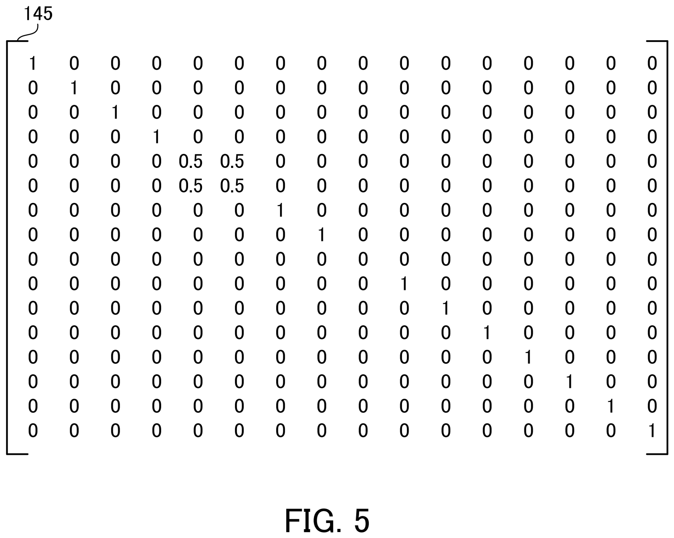

FIG. 5 illustrates an example of a matrix representing the projection onto a subspace unaffected by singular points. The matrix 145 is the representation matrix of the above projection $W_{in}$. The matrix 145 represents, in the space of generators, an orthogonal projection onto the orthogonal complement of the subspace affected by singular points. The rank of the matrix 145 is 14. The two-dimensional subspace affected by the singular points is the subspace spanned by the two basis components $S_5$-$S_6$ and $S_9$. The projection indicated by the matrix 145 is thus a projection onto the subspace excluding that two-dimensional subspace affected by the singular points. Next, functions and processing procedures of the information processing apparatus 100 are described.

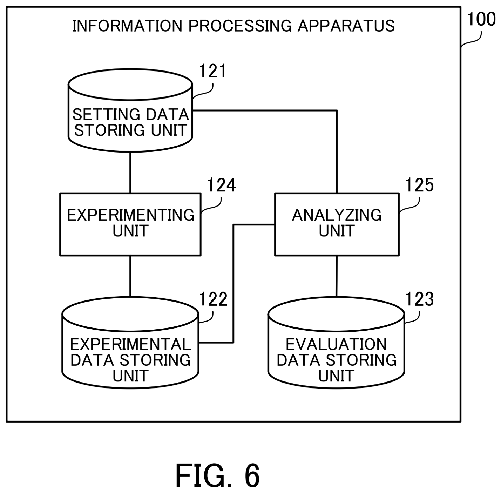

FIG. 6 is a block diagram illustrating functional examples of the information processing apparatus. The information processing apparatus 100 includes a setting data storing unit 121, an experimental data storing unit 122, an evaluation data storing unit 123, an experimenting unit 124, and an analyzing unit 125. The setting data storing unit 121, the experimental data storing unit 122, and the evaluation data storing unit 123 are implemented, for example, by using the RAM 102 or the HDD 103. The experimenting unit 124 and the analyzing unit 125 are implemented, for example, by using the CPU 101 or the GPU 104 together with programs.

The setting data storing unit 121 stores setting data. The setting data indicates contents of experiments using the quantum computer 115. The setting data indicates, for each quantum gate G, a Hamiltonian H and a generator L. The setting data also indicates generator errors $\delta L$ of quantum gates other than those to be evaluated. The setting data further specifies quantum gate sequences a to be tried and the number of repetitions N. The setting data also specifies initializations $\rho$ and measurements $\Pi$ to be tried.

The experimental data storing unit 122 stores experimental data. The experimental data is an aggregation of measurement values read from the quantum computer 115. The experimental data indicates a frequency distribution f for each combination of a quantum gate sequence a, the number of repetitions N, an initialization $\rho$, and a measurement $\Pi$. The evaluation data storing unit 123 stores evaluation data. The evaluation data indicates generator errors of the quantum gates to be evaluated, estimated from the setting data and the experimental data. However, the evaluation data may instead indicate gate errors $\delta G$, quantum gates G including errors, Hamiltonian errors $\delta H$, Hamiltonians H including errors, or generators L including errors.

The experimenting unit 124, based on the setting data stored in the setting data storing unit 121, instructs the quantum computer 115 to perform quantum computation. The experimenting unit 124 reads measurement values from the quantum computer 115, aggregates the read measurement values to generate experimental data, and stores the experimental data in the experimental data storing unit 122.

The analyzing unit 125 analyzes the setting data stored in the setting data storing unit 121 and the experimental data stored in the experimental data storing unit 122 to estimate generator errors of quantum gates to be evaluated. In doing so, the analyzing unit 125 generates an objective function and, by using a mathematical programming solver, searches for generator errors that minimize the value of the objective function. The analyzing unit 125 generates evaluation data and stores the evaluation data in the evaluation data storing unit 123. However, the analyzing unit 125 may display the evaluation data on the display device 111 or transmit the evaluation data to another information processing apparatus.

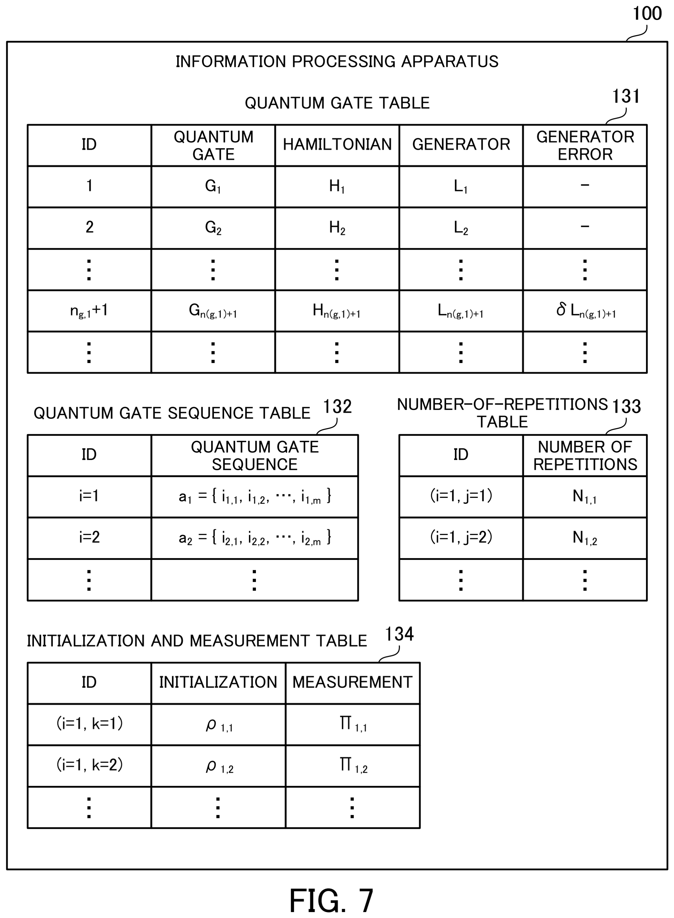

FIG. 7 illustrates an example of setting data. The setting data storing unit 121 stores a quantum gate table 131, a quantum gate sequence table 132, a number-of-repetitions table 133, and an initialization and measurement table 134.

The quantum gate table 131 associates a quantum-gate identifier with a representation matrix of the quantum gate, a representation matrix of a Hamiltonian, and a representation matrix of a generator. Different $n_g$ quantum gates are registered in the quantum gate table 131. Of the $n_g$ quantum gates, $n_{g,1}$ quantum gates are targets of evaluation, and the remaining quantum gates are not to be evaluated. For a quantum gate not to be evaluated, a further registration is made of a representation matrix of a generator error.

The quantum gate sequence table 132 associates an identifier i with a quantum gate sequence. A length-m quantum gate sequence is described by listing m identifiers contained in the quantum gate table 131. The number-of-repetitions table 133 associates an identifier (i, j) with the number of repetitions. For each quantum gate sequence contained in the quantum gate sequence table 132, one or more numbers of repetitions (typically two or more numbers of repetitions) are registered. The initialization and measurement table 134 associates an identifier (i, k) with a representation matrix indicating initialization of a quantum state and a representation matrix indicating measurement of a quantum state. For each quantum gate sequence contained in the quantum gate sequence table 132, one or more pairs of initialization and measurement are registered.

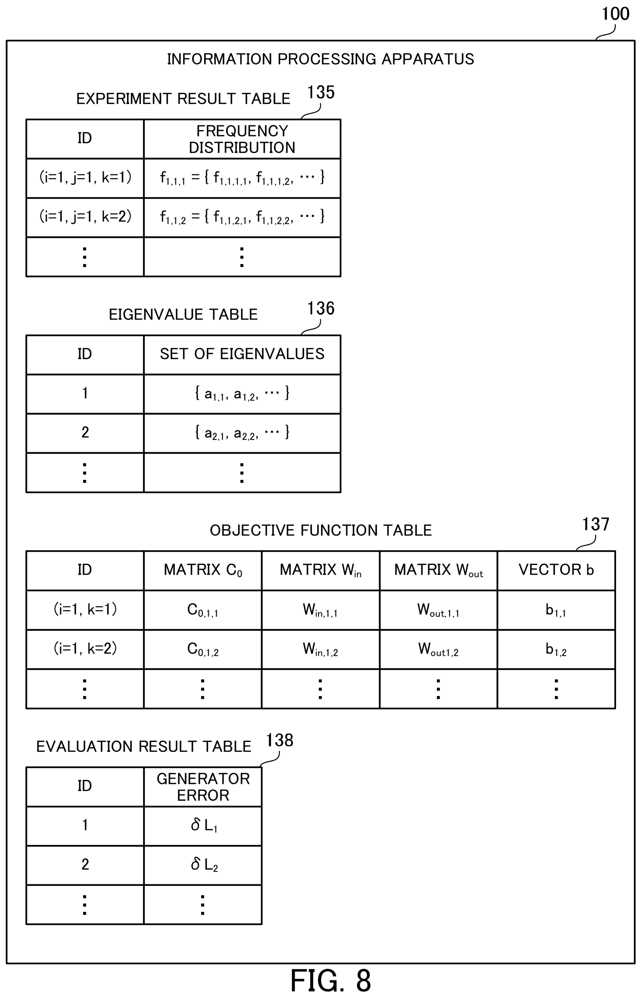

FIG. 8 illustrates examples of experimental data and evaluation data. The experimental data storing unit 122 stores an experiment result table 135. The experiment result table 135 associates an identifier (i, j, k) with a frequency distribution. For each combination of a quantum gate sequence $a_i$, the number of repetitions $N_{i,j}$, and a pair of initialization and measurement ($\rho_{i,k}$, $\Pi_{i,k}$), one frequency distribution is registered. The frequency distribution lists frequencies of multiple measurement values.

The analyzing unit 125 generates an eigenvalue table 136 and an objective function table 137. The eigenvalue table 136 associates a quantum-gate identifier with a set of eigenvalues. The identifier is common to that in the quantum gate table 131. The set of eigenvalues is calculated by performing eigendecomposition or spectral decomposition on a representation matrix of a generator.

The objective function table 137 associates an identifier (i, k) with matrices $C_0$, $W_{in}$, and $W_{out}$, and a vector b. From each combination of a quantum gate sequence $a_i$ and a pair of initialization and measurement ($\rho_{i,k}$, $\Pi_{i,k}$), one set of the matrices $C_0$, $W_{in}$, and $W_{out}$ and the vector b is calculated. Using the matrices $C_0$, $W_{in}$, and $W_{out}$ and the vector b for all combinations of $a_i$ and ($\rho_{i,k}$, $\Pi_{i,k}$), an objective function is defined that indicates the degree of accuracy in estimation of generator errors.

The evaluation data storing unit 123 stores an evaluation result table 138. The evaluation result table 138 associates a quantum-gate identifier with an estimated value of a generator error. The identifier is common to that in the quantum gate table 131. The evaluation result table 138 includes generator errors of the $n_{g,1}$ quantum gates that are to be evaluated among the $n_g$ quantum gates.

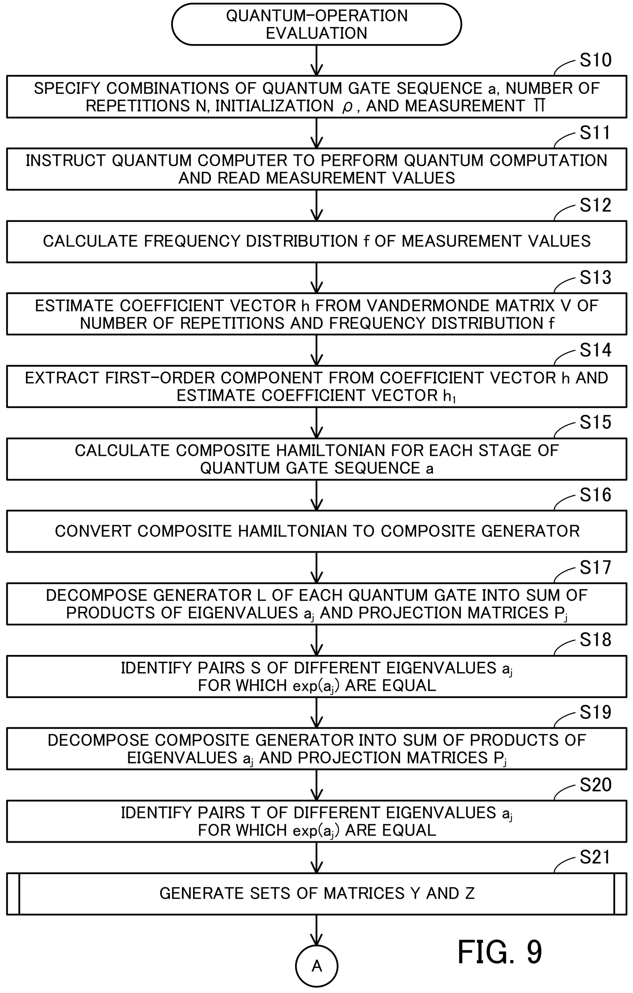

FIG. 9 is a flowchart illustrating an example procedure for quantum operation evaluation. In step S10, the experimenting unit 124 reads the setting data. Based on the setting data, the experimenting unit 124 specifies combinations of a quantum gate sequence a, the number of repetitions N, an initialization $\rho$, and a measurement $\Pi$. In step S11, for each combination specified in step S10, the experimenting unit 124 repeats, multiple times, the operations of instructing the quantum computer 115 to perform quantum computation and reading measurement values.

In step S12, for each combination specified in step S10, the experimenting unit 124 aggregates the multiple measurement values read in step S11 and calculates a frequency distribution f. In step S13, the analyzing unit 125 generates the Vandermonde matrix V with respect to the number of repetitions N. For each combination of a quantum gate sequence a, an initialization $\rho$, a measurement $\Pi$, and a measurement value x, the analyzing unit 125 estimates a coefficient vector h of a series expansion from the Vandermonde matrix V and the frequency of the measurement value x included in the frequency distribution f calculated in step S12.

In step S14, the analyzing unit 125 extracts a first-order component from the coefficient vector h of step S13 and, for each combination of a quantum gate sequence a, an initialization $\rho$, and a measurement $\Pi$, estimates a coefficient vector $h_1$. In step S15, the analyzing unit 125 calculates, for each stage of sequentially composing the quantum gates contained in the quantum gate sequence a from the beginning, a composite Hamiltonian.

In step S16, the analyzing unit 125 converts the composite Hamiltonian of each stage calculated in step S15 into a composite generator. In step S17, for each quantum gate, the analyzing unit 125 performs spectral decomposition on the generator L and decomposes the generator L into a sum of products of the eigenvalues $a_j$ and the projection matrices $P_j$. In step S18, among different eigenvalues $a_j$ calculated from the same quantum gate, the analyzing unit 125 compares values of the exponential $\exp(a_j)$. The analyzing unit 125 identifies pairs S of eigenvalues $a_j$ for which $\exp(a_j)$ are equal. However, the analyzing unit 125 may regard $\exp(a_j)$ as equal when a difference between values of $\exp(a_j)$ is less than a threshold.

In step S19, for each composite quantum gate, the analyzing unit 125 performs spectral decomposition on the composite generator and decomposes the composite generator into a sum of products of the eigenvalues $a_j$ and the projection matrices $P_j$. In step S20, among different eigenvalues $a_j$ calculated from the same composite quantum gate in step S19, the analyzing unit 125 compares values of the exponential $\exp(a_j)$ and identifies pairs T of eigenvalues $a_j$ for which $\exp(a_j)$ are equal. In step S21, for each quantum gate sequence a, the analyzing unit 125 generates sets of matrices Y and Z in accordance with the algorithm indicated by the above pseudocode 144.

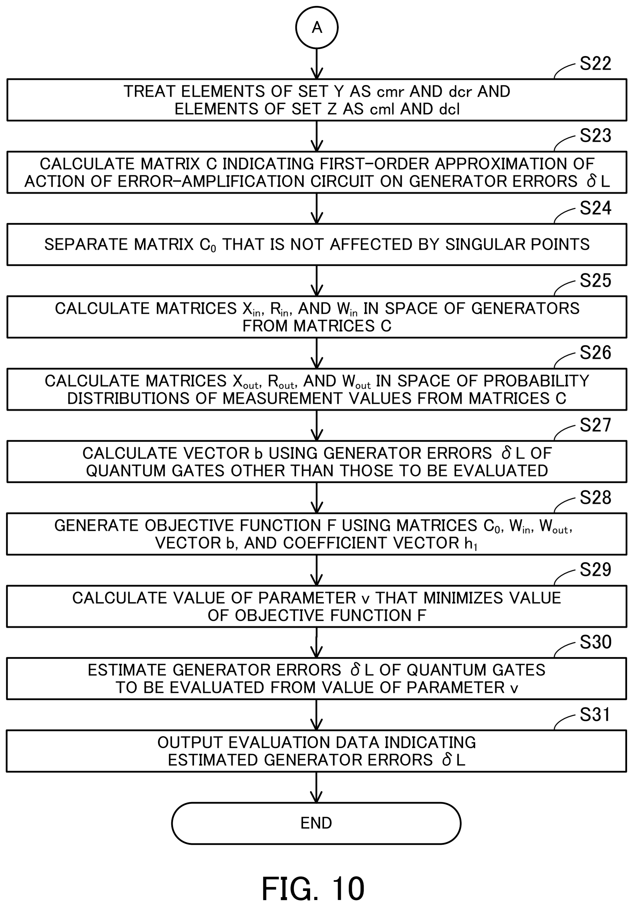

FIG. 10 is a flowchart (continued) illustrating an example procedure for quantum operation evaluation. In step S22, the analyzing unit 125, for each quantum gate sequence a, exhaustively generates combinations of elements of the set Y and elements of the set Z, treats elements of the set Y as matrices corresponding to cmr and dcr, and treats elements of the set Z as matrices corresponding to cml and dcl.

In step S23, for each combination of a quantum gate sequence a, an initialization $\rho$, and a measurement $\Pi$, the analyzing unit 125 uses the matrices of step S22 to calculate a matrix C indicating a first-order approximation of the action of an error-amplification circuit on generator errors $\delta L$. In step S24, the analyzing unit 125 separates, from the set of matrices C calculated in step S23, a matrix $C_0$ that is not affected by singular points. **In** step S25, from the set of matrices C excluding the matrix $C_0$, the analyzing unit 125 calculates matrices $X_{in}$, $R_{in}$, and $W_{in}$ in the space of generators.

**In** step S26, from a transformation matrix U that depends on the initialization $\rho$ and the measurement $\Pi$ together with the set of matrices C excluding the matrix $C_0$, the analyzing unit 125 calculates matrices $X_{out}$, $R_{out}$, and $W_{out}$ in the space of probability distributions of measurement values that correspond to the above matrices $X_{in}$, $R_{in}$, and $W_{in}$. **In** step S27, the analyzing unit 125 calculates a vector b by using generator errors $\delta L$ of quantum gates other than those to be evaluated. **In** step S28, the analyzing unit 125 generates an objective function F by using the matrix $C_0$ of step S24, the matrix Win of step S25, the matrix $W_{out}$ of step S26, the vector b of step S27, and the coefficient vector $h_1$ of step S14.

**In** step S29, the analyzing unit 125 calculates a value of a parameter v that minimizes the value of the objective function F generated in step S28. **In** step S30, from the value of the parameter v calculated in step S29, the analyzing unit 125 estimates generator errors $\delta L$ of quantum gates to be evaluated. **In** step S31, the analyzing unit 125 generates evaluation data indicating the generator errors $\delta L$ estimated in step S30 and outputs the evaluation data.

As described above, in the second embodiment, the information processing apparatus 100 estimates errors of quantum gates included in the quantum computer 115 by using quantum tomography. Therefore, the information processing apparatus 100 is configured to efficiently perform batch estimation of errors for a plurality of quantum gates. **In** addition, the information processing apparatus 100 causes the quantum computer 115 to execute an error-amplification circuit that repeats the same quantum gate sequence. As a result, minute errors of quantum gates are amplified and accuracy of error estimation from experimental data is improved. Further, a user adjusts values of control parameters of the quantum computer 115 based on the estimated errors, thereby improving accuracy of quantum operations of the quantum computer 115.

Moreover, the information processing apparatus 100 converts quantum gates into generators and linearly approximates the action of an error-amplification circuit on generator errors. This reduces the load of data analysis and improves numerical stability of the estimated errors. The information processing apparatus 100 further divides the space of generators into a subspace that includes singular points at which values diverge to infinity and a subspace that excludes singular points. The information processing apparatus 100 then performs a linear approximation of the action of the error-amplification circuit within the subspace that excludes singular points. Accordingly, the information processing apparatus 100 is configured to estimate, by the above data analysis, errors of quantum gates having singular points.

Further, among errors of quantum gates, components attributable to control of quantum operations are mainly described within the subspace excluding singular points. Therefore, errors estimated by the method of the second embodiment have accuracy sufficiently useful for calibration of the quantum computer 115.

**In** one aspect, evaluation of errors of quantum gates is made efficient. **In** any of the above aspects, the various features may be implemented in hardware, or as software modules running on one or more processors/computers. A computer program or a computer program product may be provided comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program may be stored on a non-transitory computer-readable medium, or it could, for example, be in the form of a signal such as a downloadable data signal provided from an Internet website, or it could be in any other form.

**Claims**

1. A computer program that causes a computer to execute a process comprising:

   acquiring measurement data (14) indicating measurement values of quantum states of qubits measured after a quantum computer has repeatedly executed, a plurality of times, a quantum gate sequence (13) including a plurality of quantum gates for the qubits;
   dividing a space (15) to which a matrix indicating a quantum operation by the quantum gate sequence belongs into a first subspace (15a) including a singular point (15c) at which eigenvalues satisfying predetermined conditions are calculated, and a second subspace (15b) that does not include the singular point, and generating, within a range of the second subspace, a function (16) that linearly approximates an influence of an error of a first quantum gate (13a) included in the plurality of quantum gates on the measurement values; and
   estimating, by using the function and the measurement data, the error of the first quantum gate when the quantum computer executes the first quantum gate.

2. The computer program according to claim 1, wherein:
   the singular point is a point in the space that corresponds to a matrix having different eigenvalues ($a_j$, $a_k$) whose values of exponential functions (e) are identical.

3. The computer program according to claim 1 or 2, wherein:
   the generating includes combining, one by one from the beginning, a plurality of matrices respectively indicating the plurality of quantum gates, to generate a composite matrix ($L^{(1,\ldots,t)}$), and detecting the singular point by calculating eigenvalues of each stage of the composite matrix.

4. The computer program according to any preceding claim, wherein:

   the function includes a projection matrix ($W_{in}$) that projects the error onto the second subspace, and
   the estimating includes extracting, from the measurement data, a component ($W_{out}h_1$) corresponding to the second subspace and comparing an output of the function with the component.

5. A quantum operation evaluation method executed by a computer, the quantum operation evaluation method comprising:

   acquiring measurement data (14) indicating measurement values of quantum states of qubits measured after a quantum computer has repeatedly executed, a plurality of times, a quantum gate sequence (13) including a plurality of quantum gates for the qubits;
   dividing a space (15) to which a matrix indicating a quantum operation by the quantum gate sequence belongs into a first subspace (15a) including a singular point (15c) at which eigenvalues satisfying predetermined conditions are calculated, and a second subspace (15b) that does not include the singular point, and generating, within a range of the second subspace, a function (16) that linearly approximates an influence of an error of a first quantum gate (13a) included in the plurality of quantum gates on the measurement values; and
   estimating by using the function and the measurement data, the error of the first quantum gate when the quantum computer executes the first quantum gate.

6. An information processing apparatus comprising:

memory means (11) for storing measurement data (14) indicating measurement values of quantum states of qubits measured after a quantum computer has repeatedly executed, a plurality of times, a quantum gate sequence (13) including a plurality of quantum gates for the qubits; and
processing means (12) for:

dividing a space (15) to which a matrix indicating a quantum operation by the quantum gate sequence belongs into a first subspace (15a) including a singular point (15c) at which eigenvalues satisfying predetermined conditions are calculated, and a second subspace (15b) that does not include the singular point;
generating, within a range of the second subspace, a function (16) that linearly approximates an influence of an error of a first quantum gate (13a) included in the plurality of quantum gates on the measurement values; and
estimating, by using the function and the measurement data, the error of the first quantum gate when the quantum computer executes the first quantum gate.

FIG. 1

INFORMATION PROCESSING APPARATUS ⌒100

| CPU ⌒101 | | GPU ⌒104 |

DISPLAY DEVICE ⌒111

RAM ⌒102

INPUT INTERFACE ⌒105

INPUT DEVICE ⌒112

HDD ⌒103

MEDIA READER ⌒106

RECORDING MEDIUM ⌒113

COMMUNI-CATION INTERFACE ⌒107

NETWORK ⌒114

INTERFACE ⌒108

BUS

QUANTUM COMPUTER ⌒115

QUBIT UNIT ⌒116

CONTROLLING UNIT ⌒117

MEASURING UNIT ⌒118

FIG. 2

141                                                                    142        143

×N

| I/X$_\pi$ | CR$_{+\pi/4}$ | X$_\pi$ | CR$_{-\pi/4}$ | X$_\pi$ |

$\rho$

| Y$_{\pi/2}$ | R$_+$ | R$_-$ | Y$_\pi$ (Z$_\pi$) | X$_{\pi/2}$ |

Π

INITIALI-
ZATION
CIRCUIT

QUANTUM GATE SEQUENCE

MEASURE-
MENT
CIRCUIT

# FIG. 3

PSEUDOCODE                    144

```
Y = φ , Z = φ ;

for t from 1 to m−1:

    if T(1, …, t) = φ :
        add { I } to Y;
    else:
        for (j, k) in T(1, …, t):
            CALCULATE PROJECTION MATRICES { Pᵢ } OF L(1, …, t);
            CALCULATE P = Σ Pⱼ(Pᵢ)Pₖ;
            Q = I − P,  X = dcr L(1,…,t);
            add { QX, PX } to Y;

    if Sᵢ₍ₜ₊₁₎ = φ ;
        add { I } to Z;
    else:
        for (j, k) in Sᵢ₍ₜ₊₁₎:
            CALCULATE PROJECTION MATRICES { Pᵢ } OF L(1, …, t);
            CALCULATE P = Σ Pⱼ(Pᵢ)Pₖ;
            Q = I − P,  X = dcl Lᵢ₍ₜ₊₁₎;
            add { QX, PX } to Z;
```

# FIG. 4

145

$$
\begin{bmatrix}
1 & 0 & 0 & 0 & 0 & 0 & 0 & 0 & 0 & 0 & 0 & 0 & 0 & 0 & 0 & 0 \\
0 & 1 & 0 & 0 & 0 & 0 & 0 & 0 & 0 & 0 & 0 & 0 & 0 & 0 & 0 & 0 \\
0 & 0 & 1 & 0 & 0 & 0 & 0 & 0 & 0 & 0 & 0 & 0 & 0 & 0 & 0 & 0 \\
0 & 0 & 0 & 1 & 0 & 0 & 0 & 0 & 0 & 0 & 0 & 0 & 0 & 0 & 0 & 0 \\
0 & 0 & 0 & 0 & 0.5 & 0.5 & 0 & 0 & 0 & 0 & 0 & 0 & 0 & 0 & 0 & 0 \\
0 & 0 & 0 & 0 & 0.5 & 0.5 & 0 & 0 & 0 & 0 & 0 & 0 & 0 & 0 & 0 & 0 \\
0 & 0 & 0 & 0 & 0 & 0 & 1 & 0 & 0 & 0 & 0 & 0 & 0 & 0 & 0 & 0 \\
0 & 0 & 0 & 0 & 0 & 0 & 0 & 1 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 1 & 0 & 0 & 0 & 0 & 0 & 0 \\
0 & 0 & 0 & 0 & 0 & 0 & 0 & 0 & 0 & 0 & 1 & 0 & 0 & 0 & 0 & 0 \\
0 & 0 & 0 & 0 & 0 & 0 & 0 & 0 & 0 & 0 & 0 & 1 & 0 & 0 & 0 & 0 \\
0 & 0 & 0 & 0 & 0 & 0 & 0 & 0 & 0 & 0 & 0 & 0 & 1 & 0 & 0 & 0 \\
0 & 0 & 0 & 0 & 0 & 0 & 0 & 0 & 0 & 0 & 0 & 0 & 0 & 1 & 0 & 0 \\
0 & 0 & 0 & 0 & 0 & 0 & 0 & 0 & 0 & 0 & 0 & 0 & 0 & 0 & 1 & 0 \\
0 & 0 & 0 & 0 & 0 & 0 & 0 & 0 & 0 & 0 & 0 & 0 & 0 & 0 & 0 & 1 \\
\end{bmatrix}
$$

FIG. 5

INFORMATION PROCESSING APPARATUS — 100

SETTING DATA STORING UNIT — 121

EXPERIMENTING UNIT — 124

ANALYZING UNIT — 125

EXPERIMENTAL DATA STORING UNIT — 122

EVALUATION DATA STORING UNIT — 123

FIG. 6

100

## INFORMATION PROCESSING APPARATUS

### QUANTUM GATE TABLE

131

| ID | QUANTUM GATE | HAMILTONIAN | GENERATOR | GENERATOR ERROR |
|---|---|---|---|---|
| 1 | $G_1$ | $H_1$ | $L_1$ | – |
| 2 | $G_2$ | $H_2$ | $L_2$ | – |
| ⋮ | ⋮ | ⋮ | ⋮ | ⋮ |
| $n_{g,1}+1$ | $G_{n(g,1)+1}$ | $H_{n(g,1)+1}$ | $L_{n(g,1)+1}$ | $\delta L_{n(g,1)+1}$ |
| ⋮ | ⋮ | ⋮ | ⋮ | ⋮ |

### QUANTUM GATE SEQUENCE TABLE 132

| ID | QUANTUM GATE SEQUENCE |
|---|---|
| i=1 | $a_1 = \{ i_{1,1},\ i_{1,2},\ \cdots,\ i_{1,m} \}$ |
| i=2 | $a_2 = \{ i_{2,1},\ i_{2,2},\ \cdots,\ i_{2,m} \}$ |
| ⋮ | ⋮ |

### NUMBER-OF-REPETITIONS TABLE 133

| ID | NUMBER OF REPETITIONS |
|---|---|
| (i=1, j=1) | $N_{1,1}$ |
| (i=1, j=2) | $N_{1,2}$ |
| ⋮ | ⋮ |

### INITIALIZATION AND MEASUREMENT TABLE 134

| ID | INITIALIZATION | MEASUREMENT |
|---|---|---|
| (i=1, k=1) | $\rho_{1,1}$ | $\Pi_{1,1}$ |
| (i=1, k=2) | $\rho_{1,2}$ | $\Pi_{1,2}$ |
| ⋮ | ⋮ | ⋮ |

## FIG. 7

100

## INFORMATION PROCESSING APPARATUS

EXPERIMENT RESULT TABLE 135

| ID | FREQUENCY DISTRIBUTION |
|---|---|
| $(i=1, j=1, k=1)$ | $f_{1,1,1} = \{\ f_{1,1,1,1},\ f_{1,1,1,2},\ \cdots\ \}$ |
| $(i=1, j=1, k=2)$ | $f_{1,1,2} = \{\ f_{1,1,2,1},\ f_{1,1,2,2},\ \cdots\ \}$ |
| $\vdots$ | $\vdots$ |

EIGENVALUE TABLE 136

| ID | SET OF EIGENVALUES |
|---|---|
| 1 | $\{\ a_{1,1},\ a_{1,2},\ \cdots\ \}$ |
| 2 | $\{\ a_{2,1},\ a_{2,2},\ \cdots\ \}$ |
| $\vdots$ | $\vdots$ |

OBJECTIVE FUNCTION TABLE 137

| ID | MATRIX $C_0$ | MATRIX $W_{in}$ | MATRIX $W_{out}$ | VECTOR b |
|---|---|---|---|---|
| $(i=1, k=1)$ | $C_{0,1,1}$ | $W_{in,1,1}$ | $W_{out,1,1}$ | $b_{1,1}$ |
| $(i=1, k=2)$ | $C_{0,1,2}$ | $W_{in,1,2}$ | $W_{out1,2}$ | $b_{1,2}$ |
| $\vdots$ | $\vdots$ | $\vdots$ | $\vdots$ | $\vdots$ |

EVALUATION RESULT TABLE 138

| ID | GENERATOR ERROR |
|---|---|
| 1 | $\delta L_1$ |
| 2 | $\delta L_2$ |
| $\vdots$ | $\vdots$ |

## FIG. 8

QUANTUM-OPERATION EVALUATION

S10
SPECIFY COMBINATIONS OF QUANTUM GATE SEQUENCE a, NUMBER OF REPETITIONS N, INITIALIZATION $\rho$, AND MEASUREMENT $\Pi$

S11
INSTRUCT QUANTUM COMPUTER TO PERFORM QUANTUM COMPUTATION AND READ MEASUREMENT VALUES

S12
CALCULATE FREQUENCY DISTRIBUTION f OF MEASUREMENT VALUES

S13
ESTIMATE COEFFICIENT VECTOR h FROM VANDERMONDE MATRIX V OF NUMBER OF REPETITIONS AND FREQUENCY DISTRIBUTION f

S14
EXTRACT FIRST-ORDER COMPONENT FROM COEFFICIENT VECTOR h AND ESTIMATE COEFFICIENT VECTOR $h_1$

S15
CALCULATE COMPOSITE HAMILTONIAN FOR EACH STAGE OF QUANTUM GATE SEQUENCE a

S16
CONVERT COMPOSITE HAMILTONIAN TO COMPOSITE GENERATOR

S17
DECOMPOSE GENERATOR L OF EACH QUANTUM GATE INTO SUM OF PRODUCTS OF EIGENVALUES $a_j$ AND PROJECTION MATRICES $P_j$

S18
IDENTIFY PAIRS S OF DIFFERENT EIGENVALUES $a_j$ FOR WHICH $\exp(a_j)$ ARE EQUAL

S19
DECOMPOSE COMPOSITE GENERATOR INTO SUM OF PRODUCTS OF EIGENVALUES $a_j$ AND PROJECTION MATRICES $P_j$

S20
IDENTIFY PAIRS T OF DIFFERENT EIGENVALUES $a_j$ FOR WHICH $\exp(a_j)$ ARE EQUAL

S21
GENERATE SETS OF MATRICES Y AND Z

A

FIG. 9

A

S22

TREAT ELEMENTS OF SET Y AS cmr AND dcr AND
ELEMENTS OF SET Z AS cml AND dcl

S23

CALCULATE MATRIX C INDICATING FIRST−ORDER APPROXIMATION OF
ACTION OF ERROR−AMPLIFICATION CIRCUIT ON GENERATOR ERRORS $\delta$L

S24

SEPARATE MATRIX $C_0$ THAT IS NOT AFFECTED BY SINGULAR POINTS

S25

CALCULATE MATRICES $X_{in}$, $R_{in}$, AND $W_{in}$ IN SPACE OF GENERATORS
FROM MATRICES C

S26

CALCULATE MATRICES $X_{out}$, $R_{out}$, AND $W_{out}$ IN SPACE OF PROBABILITY
DISTRIBUTIONS OF MEASUREMENT VALUES FROM MATRICES C

S27

CALCULATE VECTOR b USING GENERATOR ERRORS $\delta$L OF
QUANTUM GATES OTHER THAN THOSE TO BE EVALUATED

S28

GENERATE OBJECTIVE FUNCTION F USING MATRICES $C_0$, $W_{in}$, $W_{out}$,
VECTOR b, AND COEFFICIENT VECTOR $h_1$

S29

CALCULATE VALUE OF PARAMETER v THAT MINIMIZES VALUE
OF OBJECTIVE FUNCTION F

S30

ESTIMATE GENERATOR ERRORS $\delta$L OF QUANTUM GATES
TO BE EVALUATED FROM VALUE OF PARAMETER v

S31

OUTPUT EVALUATION DATA INDICATING
ESTIMATED GENERATOR ERRORS $\delta$L

END

FIG. 10

Europäisches
Patentamt

European
Patent Office

Office européen
des brevets

# EUROPEAN SEARCH REPORT

**Application Number**

EP 25 22 6242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2024 122307 A (UNIV TOKYO) 9 September 2024 (2024-09-09) | 1,3-6 | INV. G06N10/20 |
| A | * abstract; claims 1-14; figures 1-11 * * paragraph [0005] - paragraph [0318] * | 2 | G06N10/60 G06N10/70 |
| | ----- | | |
| A | GABRIEL O. SAMACH ET AL: "Lindblad Tomography of a Superconducting Quantum Processor", ARXIV.ORG CORNELL UNIVERSITY LIBRARY, 201 OLIN LIBRARY CORNELL UNIVERSITY ITHACA, NY 14853, 23 December 2022 (2022-12-23), XP091401063, DOI: 10.1103/PHYSREVAPPLIED.18.064056 * page 1 - page 12, right-hand column, paragraph 3 * * page 13 - page 21 * | 1-6 | |
| | ----- | | |
| A | DMITRII DOBRYNIN ET AL: "Compressed-sensing Lindbladian quantum tomography with trapped ions", ARXIV.ORG CORNELL UNIVERSITY LIBRARY, 201 OLIN LIBRARY CORNELL UNIVERSITY ITHACA, NY 14853, 12 March 2024 (2024-03-12), XP091698006, * page 1 - page 20, right-hand column, paragraph 1 * | 1-6 | **TECHNICAL FIELDS SEARCHED (IPC)** G06N |
| | ----- | | |
| X,P | US 2025/238704 A1 (SUGIYAMA TAKANORI [JP]) 24 July 2025 (2025-07-24) * the whole document * | 1-6 | |
| | ----- | | |

The present search report has been drawn up for all claims

| Place of search | Date of completion of the search | Examiner |
|---|---|---|
| The Hague | 23 March 2026 | Volkmer, Markus |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 22 6242

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2026

| Patent document cited in search report | Publication date | Patent family member(s) | Publication date |
|---|---|---|---|
| JP 2024122307 A | 09-09-2024 | JP 2024122307 A<br>WO 2024181166 A1 | 09-09-2024<br>06-09-2024 |
| US 2025238704 A1 | 24-07-2025 | EP 4589490 A1<br>JP 2025112382 A<br>US 2025238704 A1 | 23-07-2025<br>01-08-2025<br>24-07-2025 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190102917

- WO 2020228470 A

**Non-patent literature cited in the description**

- **KOHOUT**. the open journal for quantum science. *Gate Set Tomography*, October 2021, vol. 5, 557
- **NEEREJA SUNDARESAN** ; **ISAAC LAUER** ; **EMILY PRITCHETT** ; **EASWAR MAGESAN** ; **PETAR JURCEVIC** ; **JAY M. GAMBETTA**. Reducing Unitary and Spectator Errors in Cross Resonance with Optimized Rotary Echoes. *PRX Quantum of the American Physical Society*, December 2020, vol. 1, 020318

- **GABRIEL O. SAMACH** ; **AMI GREENE** ; **JOHANNES BORREGAARD** ; **MATTHIAS CHRISTANDL** ; **JOSEPH BARRETO** ; **DAVID K. KIM** ; **CHRISTOPHER M. MCNALLY** ; **ALEXANDER MELVILLE** ; **BETHANY M. NIEDZIELSKI** ; **YOUNG-KYU SUNG**. Lindblad Tomography of a Superconducting Quantum Processor. *Physical Review Applied of the American Physical Society*, December 2022, vol. 18, 064056
- **YANWU GU** ; **RAJESH MISHRA** ; **BERTHOLD-GEORG ENGLERT** ; **HUI KHOON NG**. Randomized Linear Gate-Set Tomography. *PRX Quantum of the American Physical Society*, August 2021, vol. 2, 030328